# EUROPEAN PATENT APPLICATION

(11) **EP 1 848 241 A2**
(43) Date of publication of application: **24.10.2007**
(21) Application number: 07106358.0
(22) Date of filing: 17.04.2007
(51) Int. Cl.: H04Q 7/38

(54) **Method and system using In-Band Approach for providing value added services without using prefix**

(30) Priority: 17.04.2006 US 792334 P
(71) Applicant: Roamware, Inc., San Jose, CA 95128 (US)
(72) Inventor: Jiang, Yue Jun, Danville, CA 94506 (US)
(74) Representative: Wallis, Helen Frances Mary

(57) **Abstract**

The present invention proposes a method for providing value added services. The method includes intercepting a voice circuit, associated with a call from a subscriber to a recipient, at an Interceptor unit, while the voice circuit is connected to a switch. The subscriber calls a recipient's number without any prefix. The method further includes prompting the subscriber, by an intelligent voice interactive unit, to make an indication of service selection over the voice circuit. The method further includes sending by the intelligent voice interactive unit, the indication of service selection to the Interceptor unit. The method further includes determining by the Interceptor unit, a service application using the indication of service selection. The service application is a value added service selected by the subscriber.

## Description

### Related Applications

This application claims the benefit of United States Provisional Patent Application Serial Number 60/792,334, entitled "A Post-Fixed Approach to Network-Based Call Related Value Added Services", filed on April 17, 2006. Further, this application is related to United States Patent Application Serial Number 09/932,439, entitled "System and method for Wireless voice channel data integration", filed on August 16, 2001, claiming priority from 60/226,255. Further, this application is also related to United States Patent Application Number 11/520,799, entitled "Voice SMS and Video SMS", filed on September 14, 2006. Further, this application is also related to United States Patent Application Number 11/520,795, entitled "Color Multimedia Message", filed September 14, 2006. Further, this application is also related to United States Patent Application Number 11/520,794, entitled "Session-Based Multimedia Messaging Service", filed September 14, 2006. Further this application is also related to United States Patent Application Number 11/708,679, entitled "Method and System for Sending and Creating Expressive Messages", filed on February 21, 2007. Further, this application is also related to United States Patent Application Number 11/443,434, entitled "Method and System for Call-Setup Triggered Push Content", filed on May 31, 2006, claiming priority from Application Number 60/595,032, filed May 31, 2005 and is related to Application No. 09/932,439, filed August 16, 2001. Further, this application also claims the benefit of United States Provisional Patent Application Number 60/596,892, entitled "Personalized Ring Forward Tones." The aforementioned patent applications are incorporated herein by this reference in their entireties.

### Field of the invention

The present invention generally relates to providing value added services to subscribers in communication networks. More specifically, the invention relates to providing value added services without using a prefix.

### Background of the invention

Mobile communication services are becoming increasingly popular and there is increased competition among mobile service providers to attract more subscribers and increase their revenue. Consequently, many mobile service providers offer value added services to their subscribers. These value added services encourage subscribers to increase their mobile phone usage, thereby driving up revenue of the mobile service providers. Typically, the value added services are classified as call-related and non call-related value added services. Some examples of such value added services are voice Short Message Service (SMS), background music, color SMS, and Unstructured Supplementary Services Data (USSD) call me service.

Many existing techniques for providing these value added services use a prefix-based approach. In a prefix-based approach, the subscriber either prefixes a recipient's number with a short code or dials a service number (e.g. an 800 number) of a desired value added service application to enter the recipient's number, or sends a Short Message Service (SMS) to the desired value added service application with the recipient's number. For example, the subscriber needs to prefix the recipient's number with "*" to activate the voice SMS application to deposit a voice message for the recipient. The voice SMS application then notifies the recipient through an SMS about the deposited voice message. However, a major disadvantage of the prefix-based approach is that the subscriber cannot use his phone address book or call log lists, such as outgoing calls, calls received, and missed calls, to dial the recipient's number, as entries in the phone address book and the call log lists do not contain prefixes corresponding to the prefix-based value added services. Moreover, it is not practical to create duplicate phone book entries with prefixes for each of the prefix-based value added services. The subscribers may not always remember the prefixes for the value added service they wish to obtain.

In some countries such as Brazil, by regulation, a local subscriber must explicitly specify a long distance carrier with a prefix of carrier-selection code for every long distance call the local subscriber makes. The local subscriber is national roamer but not an international roamer. The local subscriber cannot use phone book entries easily. Although it is possible to create a phone book entry for each carrier selection code for each recipient number, for a received call or missed call from a long distance caller in the country, the caller ID still does not carry the carrier-selection code. As a result, if the recipient wants to call back the caller from call logs (including calls made, received and missed), he will have to edit the phone number in the call logs(if his phone supports the editing capability) or reenter the phone number (if the phone does not support the editing capability) with carrier-selection code prefix. This leads to a poor user experience to the recipient.

In some techniques for providing the value added services, the subscriber dials the recipient's number without any prefix. The subscriber then receives a message, such as a Short Message Service (SMS), on his handset while the call is on hold. Then he selects a desired value added service by replying to the message. The system that implements such techniques activates the desired value added service. However, in this case, the subscriber has to wait for the message to reach his mobile handset before he can select the desired value added service. This may lead to an inferior user experience. The subscriber must have a mobile handset that is capable of receiving and responding to the out-of-band message while the call is on hold.

One or more of the above techniques are inconvenient for the subscriber. Hence, there is a need in the art of a solution for providing value added services to the subscriber without requirement of dialing a prefix and with a better user interface for implementing the same.

### Summary

The present invention generally relates to method, system and computer program product for providing value added services. The method includes intercepting a voice circuit, associated with a call from a subscriber to a recipient, at an Interceptor unit, while the voice circuit is connected to a switch. The subscriber calls a recipient's number without any prefix. The method further includes prompting the subscriber, by an intelligent voice interactive unit, to make an indication of service selection over the voice circuit. The method further includes sending by the intelligent voice interactive unit, the indication of service selection to the Interceptor unit. The method further includes determining by the Interceptor unit, a service application using the indication of service selection. The service application is a value added service selected by the subscriber.

The invention proposes a system for providing value added services. The system includes an Interceptor unit for intercepting a voice circuit associated with a call from a subscriber to a recipient, while the voice circuit is also connected to a switch. The subscriber calls a recipient's number without any prefix. The system further includes an intelligent voice interactive unit for prompting the subscriber to make an indication of service selection over the voice circuit. The intelligent voice interactive unit further sends the indication of service selection to the Interceptor unit. The Interceptor unit further determines a service application using the indication of service selection. The service application is a value added service selected by the subscriber.

The invention proposes a computer program product for providing value added services. The computer program product includes a computer usable medium including a computer usable program code for intercepting a voice circuit, associated with a call from a subscriber to a recipient, at an Interceptor unit, while the voice circuit is connected to a switch. The subscriber calls a recipient's number without any prefix. The computer program product further includes a computer usable program code for prompting the subscriber by an intelligent voice interactive unit to make an indication of service selection over the voice circuit. The computer program product further includes a computer usable program code for sending by the intelligent voice interactive unit, the indication of service selection to the Interceptor unit. The computer program product further includes a computer usable program code for determining by the Interceptor unit, a service application using the indication of the service selection. The service application is a value added service selected by the subscriber.

A first aspect of the invention provides a method for providing value added services to a subscriber of a mobile communications network, the method comprising: intercepting a communication from the subscriber; providing a prompt for service selection to the subscriber; receiving an indication of service selection; and determining a service application based on the received indication of service selection.

A second aspect of the invention provides a method for providing non-prefix based value added services to a subscriber of a mobile communications network having an interceptor unit, the method comprising: intercepting a non-prefix communication from the subscriber; providing a prompt for service selection to the subscriber; receiving an indication of service selection from the subscriber at the interceptor unit; and determining a service application based on the received indication of service selection; wherein the service application is a non-prefix based value added service.

The method may further comprise: initiating the service application.

The service application may be initiated via an adjunct approach or via an integrated approach.

The prompt for service selection may be received over an in-band channel.

The method may further comprise: resuming the non-prefix communication based on the non-prefix based value added service.

The non-prefix communication may have an associated voice circuit, and intercepting a non-prefix communication may include: intercepting the associated voice circuit; and holding the intercepted voice circuit for a pre-defined time interval.

The associated voice circuit may be intercepted at a switch.

The method may further comprise: at the interceptor unit, applying a filtering criterion to the non-prefix communication.

The non-prefix communication may be initiated using a telephone number received from a group consisting of an address book, a number list, and a telephone pad.

The interceptor unit may be an Intelligent Service Control Point (ISCP).

The prompt for service selection may be selected from a group consisting of a beep sound, a warning message, and a voice menu.

A standby interceptor unit may be provided for failover support.

The method may further comprise: providing a prompt for carrier selection code to the subscriber.

A third aspect provides a method for providing value added services to a subscriber of a mobile communications network, the method comprising: intercepting a communication request from the subscriber, including an indication of a destination of the communication request; providing an option for selection of a communications service to the subscriber; receiving an indication of selection of the communications service; and operating a service application based on the received indication of selection of the communications service.

Thee service application may be voice Short Message Service (SMS).

The service application may be adding media to a subscriber communication.

The service application may be monitoring a communications session for voice analysis.

The service application may be monitoring a voice communications session to detect lies.

The service application may be monitoring a voice communications session for emotion.

The service application may be analyzing the language of a text message for meaning and adding media to that text message according to the meaning.

The service application may be recognizing music.

The option may be a visual indication of service selection choices or an audible prompt.

The indication of selection may be a character entered on the subscriber's handset.

The indication of selection may be spoken by the subscriber.

Another aspect provides a system for providing value added services to a subscriber of a mobile communications network, the system comprising: means for intercepting a communication from the subscriber; means for providing a prompt for service selection to the subscriber; means for receiving an indication of service selection; and means for determining a service application based on the received indication of service selection.

A further aspect provides a system for providing non-prefix based value added services to a subscriber of a mobile communications network having an interceptor unit, the system comprising: means for intercepting a non-prefix communication from the subscriber; means for providing a prompt for service selection to the subscriber; means for receiving an indication of service selection from the subscriber at the interceptor unit; and means for determining a service application based on the received indication of service selection; wherein the service application is a non-prefix based value added service.

The system may further comprise: means for initiating the service application.

The service application may be initiated via an adjunct approach or via an integrated approach.

The prompt for service selection may be received over an in-band channel.

The system may further comprise: means for resuming the non-prefix communication based on the non-prefix based value added service.

The non-prefix communication may have an associated voice circuit, and the means for intercepting a non-prefix communication may include: means for intercepting the associated voice circuit; and means for holding the intercepted voice circuit for a pre-defined time interval.

The associated voice circuit may be intercepted at a switch.

The system may further comprise: means for applying a filtering criterion to the non-prefix communication.

The non-prefix communication may be initiated using a telephone number received from a group consisting of an address book, a number list, and a telephone pad.

The interceptor unit may be an Intelligent Service Control Point (ISCP).

The prompt for service selection may be selected from a group consisting of a beep sound, a warning message, and a voice menu.

A standby interceptor unit may be provided for failover support.

The system may further comprise: means for providing a prompt for carrier selection code to the subscriber.

Another aspect provides a system for providing value added services to a subscriber of a mobile communications network, the system comprising: means for intercepting a communication request from the subscriber, including an indication of a destination of the communication request; means for providing an option for selection of a communications service to the subscriber; means for receiving an indication of selection of the communications service; and means for operating a service application based on the received indication of selection of the communications service.

The service application may be voice Short Message Service (SMS).

The service application may be adding media to a subscriber communication.

The service application may be monitoring a communications session for voice analysis.

The service application may be monitoring a voice communications session to detect lies.

The service application may be monitoring a voice communications session for emotion.

The service application may be analyzing the language of a text message for meaning and adding media to that text message according to the meaning.

The service application may be recognizing music.

The option may be a visual indication of service selection choices or an audible prompt.

The indication of selection may be a character entered on the subscriber's handset or may be spoken by the subscriber.

Further aspects of the invention include a computer program product comprising a computer usable medium having control logic stored therein for causing a computer to provide non-prefix based value added services to a subscriber of a mobile communications network having an interceptor unit, the control logic comprising: first computer readable program code means for intercepting a non-prefix communication from the subscriber; second computer readable program code means for providing a prompt for service selection to the subscriber; third computer readable program code means for receiving an indication of service selection from the subscriber at the interceptor unit; and fouth computer readable program code means for determining a service application based on the received indication of service selection; wherein the service application is a non-prefix based value added service.

The control logic may further comprise: fifth computer readable program code means for initiating the service application.

The service application may be initiated via an adjunct approach or via an integrated approach.

The prompt for service selection may be received over an in-band channel.

The control logic may further comprise: fifth computer-readable program code means for resuming the non-prefix communication based on the non-prefix based value added service.

The non-prefix communication may have an associated voice circuit, and the first computer readable program code means for intercepting a non-prefix communication may include: fifth computer readable program code means for intercepting the associated voice circuit; and sixth computer readable program code means for holding the intercepted voice circuit for a pre-defined time interval.

The associated voice circuit may be intercepted at a switch.

The control logic may further comprise: fifth computer readable program code means for applying a filtering criterion to the non-prefix communication.

The non-prefix communication may be initiated using a telephone number received from a group consisting of an address book, a number list, and a telephone pad.

The interceptor unit may be an Intelligent Service Control Point (ISCP).

The prompt for service selection may be selected from a group consisting of a beep sound, a warning message, and a voice menu.

A standby interceptor unit may be provided for failover support.

The control logic may further comprise: fifth computer readable program code means for providing a prompt for carrier selection code to the subscriber.

A yet further aspect provides a computer program product comprising a computer usable medium having control logic stored therein for causing a computer to provide value added services to a subscriber of a mobile communications network, the control logic comprising: first computer readable program code means for intercepting a communication request from the subscriber, including an indication of a destination of the communication request; second computer readable program code means for providing an option for selection of a communications service to the subscriber; third computer readable program code means for receiving an indication of selection of the communications service; and fourth computer readable program code means for operating a service application based on the received indication of selection of the communications service.

The service application may be voice Short Message Service (SMS) .

The service application may be adding media to a subscriber communication.

The service application may be monitoring a communications session for voice analysis.

The service application may be monitoring a voice communications session to detect lies.

The service application may be monitoring a voice communications session for emotion.

The service application may be analyzing the language of a text message for meaning and adding media to that text message according to the meaning.

The service application may be recognizing music.

The option may be a visual indication of service selection choices or an audible prompt.

The indication of selection may be a character entered on the subscriber's handset or may be spoken by the subscriber.

### Brief description of drawings

FIG. 1 illustrates a system for providing in-band Non-prefix based Value Added Services (NVAS) to a subscriber using an adjunct approach, in accordance with an embodiment of the present invention;
FIGS. 2A, 2B, and 2C represent a signal flow for providing the in-band NVAS to the subscriber over an INAP interface using a new subscription trigger profile in the adjunct approach, in accordance with a first embodiment of the present invention;
FIGS. 3A, 3B, and 3C represent a signal flow for providing the in-band NVAS to the subscriber over the INAP interface using the new subscription trigger profile in the adjunct approach, in accordance with a second embodiment of the present invention;
FIGS. 4A and 4B represent a signal flow for providing the in-band NVAS to the subscriber over a WIN interface using a new subscription WIN trigger profile in the adjunct approach, in accordance with an embodiment of the present invention;
FIGS. 5A, 5B, and 5C represent a signal flow for providing the in-band NVAS to the subscriber over the INAP interface using an existing subscription trigger profile in the adjunct approach, in accordance with a first embodiment of the present invention;
FIGS. 6A, 6B, and 6C represent a signal flow for providing the in-band NVAS to the subscriber over the INAP interface using the existing subscription trigger profile in the adjunct approach, in accordance with a second embodiment of the present invention;
FIGS. 7A to 7E represent a signal flow for providing the in-band NVAS to the subscriber over the WIN interface using an existing subscription WIN trigger profile in the adjunct approach, in accordance with an embodiment of the present invention;
FIG. 8 illustrates a subsystem depicting an ISUP loop-back implementation of an ISUP interface between a switch and an intelligent system in the adjunct approach, in accordance with an embodiment of the present invention;
FIGS. 9A and 9B represent a signal flow for providing the in-band NVAS to the subscriber using the ISUP loop-back implementation in the adjunct approach, in accordance with an embodiment of the present invention;
FIG. 10 illustrates a subsystem depicting an ISUP redirect implementation of the ISUP interface between the switch and the intelligent system in the adjunct approach, in accordance with an embodiment of the present invention;
FIGS. 11A and 11B represent a signal flow for providing the in-band NVAS to the subscriber using the ISUP redirect implementation in the adjunct approach, in accordance with an embodiment of the present invention;
FIG. 12 illustrates a system for providing the in-band NVAS using an integrated approach, in accordance with an embodiment of the present invention;
FIGS. 13A and 13B represent a signal flow for providing the in-band NVAS to the subscriber over the INAP interface using a new subscription trigger profile in the integrated approach, in accordance with an embodiment of the present invention;
FIGS. 14A and 14B represent a signal flow for providing the in-band NVAS to the subscriber using the ISUP loop-back implementation in the integrated approach, in accordance with an embodiment of the present invention; and
FIGS. 15A and 15B represent a signal flow for providing the in-band NVAS to the subscriber using the ISUP redirect implementation in the integrated approach, in accordance with an embodiment of the present invention.

### Detailed description

In the following description, for purposes of explanation, specific numbers, materials and configurations are set forth in order to provide a thorough understanding of the invention. It will be apparent, however, to one having ordinary skill in the art, that the invention may be practiced without these specific details. In some instances, well-known features may be omitted or simplified so as not to obscure the present invention. Furthermore, reference in the specification to "one embodiment" or "an embodiment" means that a particular feature, structure or characteristic described in connection with the embodiment is included in at least one embodiment of the invention. The appearances of the phrase "in an embodiment" in various places in the specification are not necessarily all referring to the same embodiment. Particular embodiments of the present invention will now be described in greater detail with reference to the figures.

The present invention proposes a system for providing a Value Added Service (VAS) to a subscriber without a need for the subscriber to dial any prefix. The value added service without using any prefix is, hereinafter, referred to as a Non-prefix based Value Added Service (NVAS). The subscriber makes a call to a recipient directly, using either his phone address book or a phone call log list (for example, a missed calls list, an incoming calls list, or an outgoing calls list), or a phone pad, without dialing any prefix. The system intercepts the call and holds a voice circuit associated with the call at a switch. Thereafter, the system prompts the subscriber to make an indication of service selection corresponding to a value added service of his choice. The system prompts the subscriber over an in-band channel, i.e. over the same voice circuit associated with the call. The system also prompts the subscriber using an interactive voice response menu. The system for providing the NVAS is, hereinafter, referred to as an in-band NVAS System (in-band NVASS). The in-band NVASS then, facilitates initiation of a service application corresponding to the indication of service selection, and thereby, provides the selected value added service to the subscriber. In an embodiment of the present invention, the service application is an existing service application deployed by an operator. In this case, the in-band NVASS initiates the service application by directing the switch to route the call to the service application using the operator's existing configuration. This approach is referred to as an adjunct approach. In another embodiment of the present invention, the service application is integrated with the system. The in-band NVASS directly initiates the service application and this approach is referred to as an integrated approach. The in-band NVASS can facilitate call-related as well as non call-related value added services in both the adjunct and integrated approach.

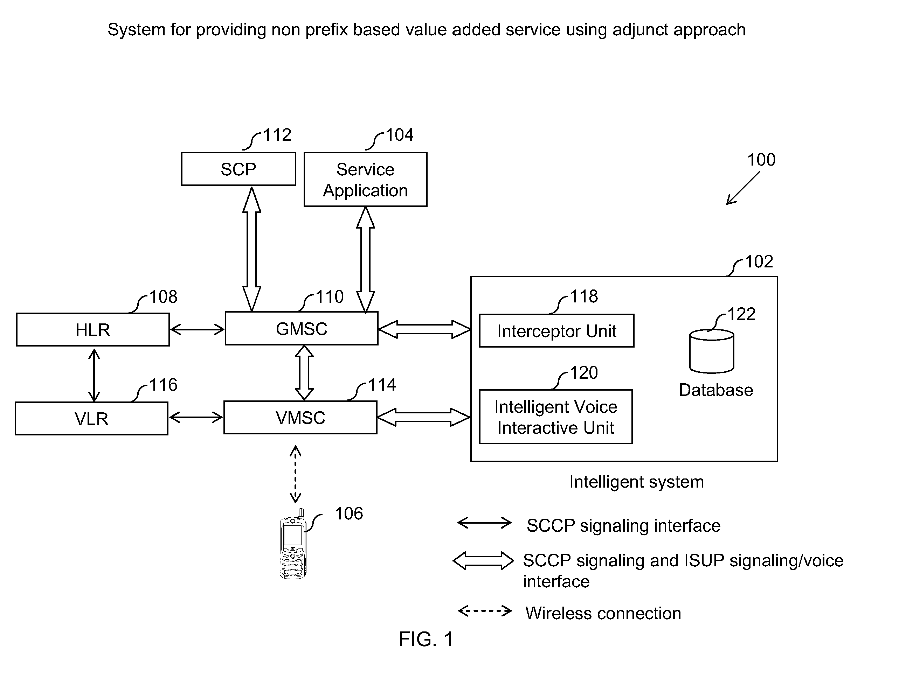

FIG. 1 illustrates a system 100 for providing the in-band NVAS for using the adjunct approach, according to an embodiment of the present invention. System 100 includes an intelligent system 102 and a service application 104 deployed by the operator. Intelligent system 102 facilitates initiation of service application 104 using the adjunct approach without a subscriber 106 being required to dial a prefix corresponding to service application 104. Subscriber 106 may interchangeably, be referred to as a subscriber A. System 100 further includes a Home Location Register (HLR) 108, a Gateway Mobile Switching Center (GMSC) 110, a Service Control Point (SCP) 112, a Visited Mobile Switching Center (VMSC) 114, and a Visited Location Register (VLR) 116. Intelligent system 102, service application 104, HLR 108, GMSC 110, and SCP 112 reside in a Home Public Mobile Network (HPMN) of subscriber 106. VMSC 114 and VLR 116 represent current location of subscriber 106. The operator provides the NVAS to subscriber 106 registered in the HPMN. In this case, VMSC 114 and VLR 116 reside in the HPMN. The operator may also opt to provide the in-band NVAS to roaming subscribers of the HPMN, currently roaming in a Visited Public Mobile Network (VPMN). In this case, VMSC 114 and VLR 116 reside in the VPMN. Service application 104, GMSC 110, SCP 112, and VMSC 114 communicate using Signaling Connection and Control Part (SCCP) signaling and Integrated Services digital network User Part (ISUP) signaling and voice interface. In addition, intelligent system 102 is coupled to GMSC 110 and VMSC 114 using SCCP signaling and ISUP signaling and voice interface. Moreover, HLR 108 and VLR 116 communicate with GMSC 110 and VMSC 114 using SCCP signaling. It would be apparent to a person skilled in the art that system 100 may also include various other network elements (not shown in FIG. 1) depending on the architecture under consideration.

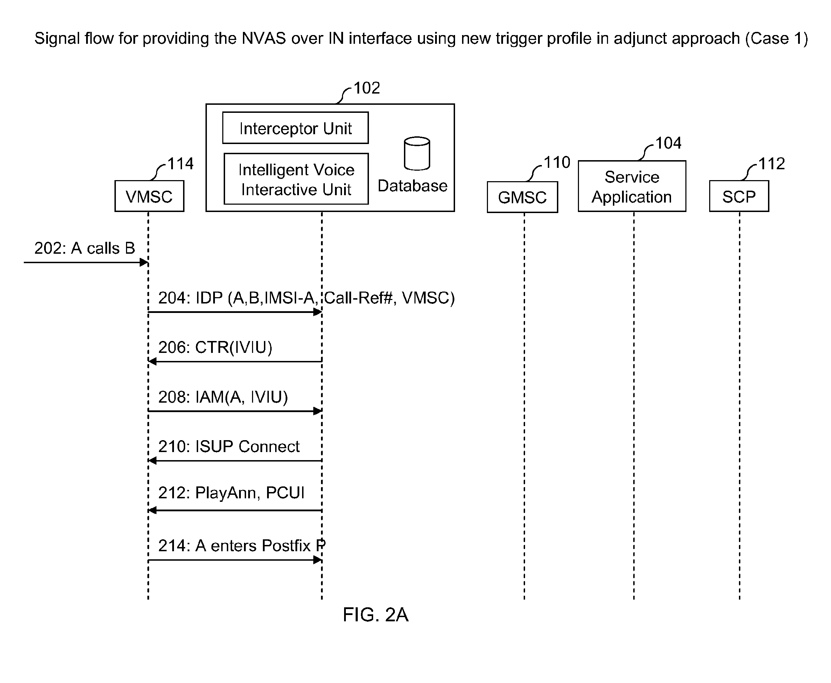

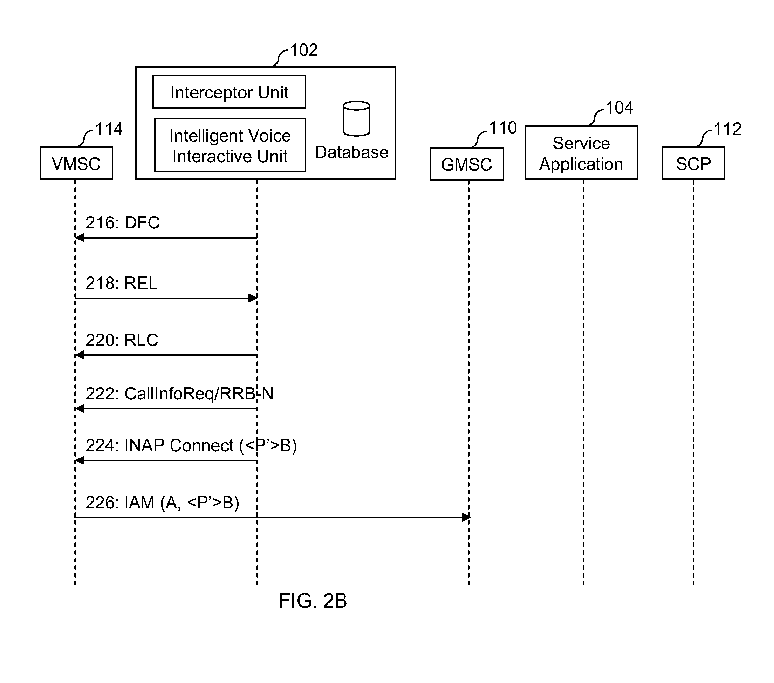

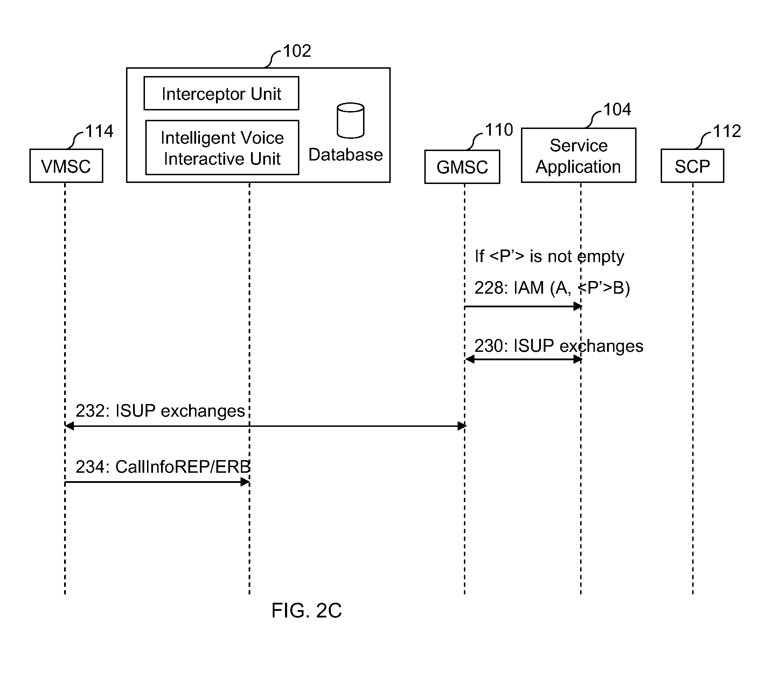

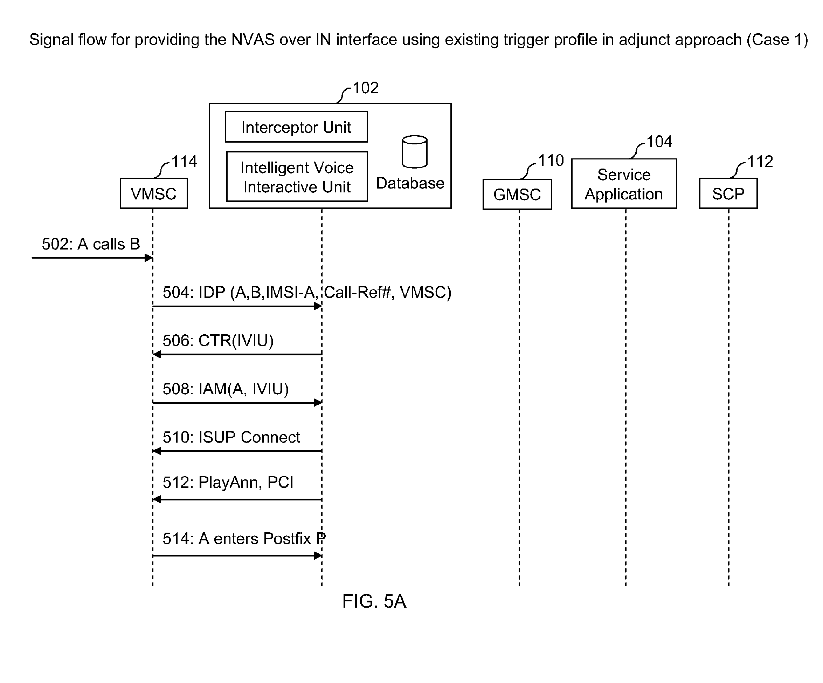

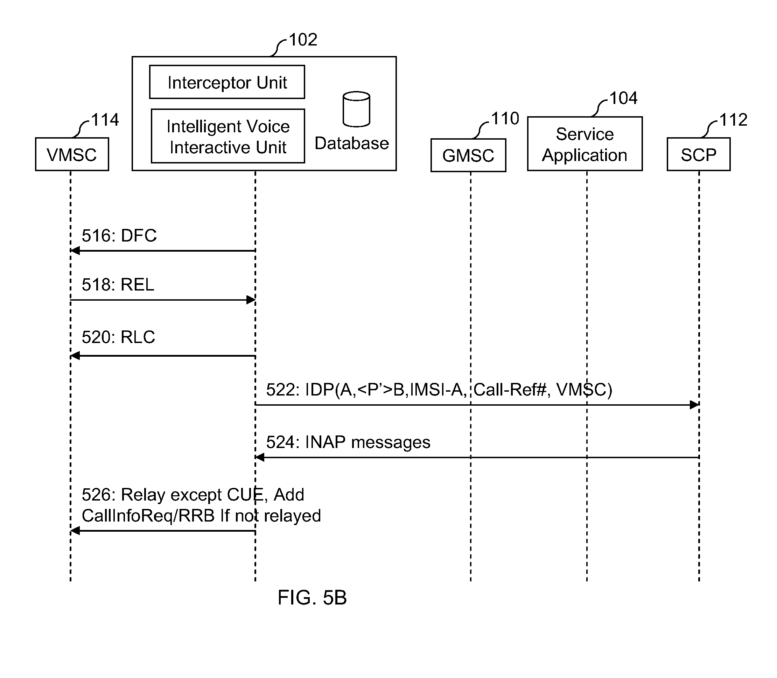

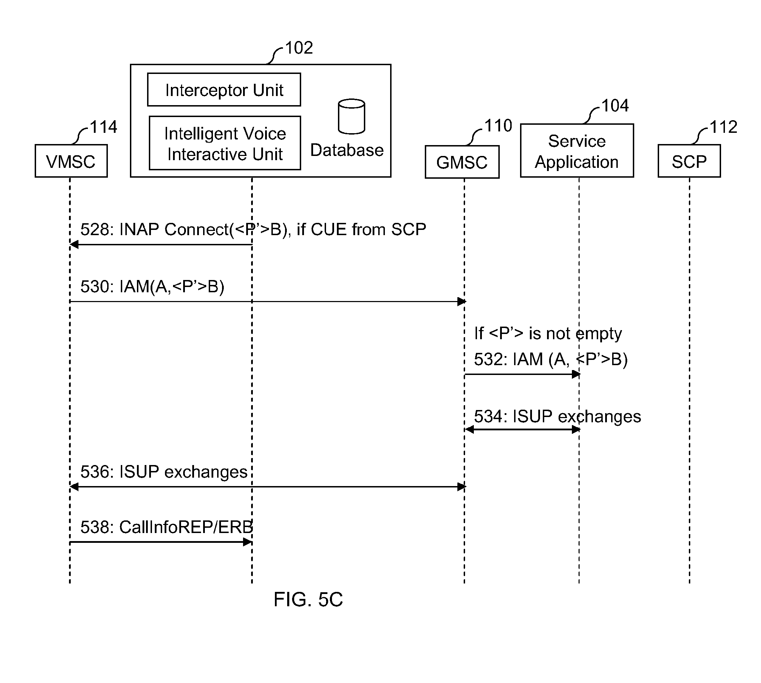

In an embodiment of the present invention, system 100 defines a new subscription trigger profile associated with the NVAS, and stores the new subscription trigger profile, hereinafter denoted as an NVAS trigger profile, in HLR 108. The NVAS trigger profile includes an address of Interceptor unit 118 in a trigger address list defined in the NVAS trigger profile. Subscriber 106 needs to subscribe to the NVAS to have a corresponding NVAS trigger profile. The NVAS trigger profile includes at least one of Customized applications for mobile network enhanced logic Subscription Information for mobile originated calls (O-CSI), Routing Category, Subscription Tick, and Wireless Intelligent Network (WIN) subscription. This subscription trigger profile may depend on the operator's configuration of roaming relationship of the HPMN with the VPMN. HLR 108 sends the NVAS trigger profile to VLR 116, when subscriber 106 registers at VLR 116. For example, in a Global System for Mobile communications (GSM) implementation, if the subscriber is registered at the HPMN, HLR 108 may send an operator-specific NVAS trigger profile such as the Routing Category to VLR 116. However, if the subscriber is registered with the VPMN, HLR 108 can send the O-CSI to VLR 116 in the VPMN. FIGS. 2 to 4 illustrate various embodiments corresponding to providing the NVAS to subscriber 106 using the NVAS trigger profile. HLR 108 also stores one or more existing subscription trigger profiles corresponding to one or more existing Intelligent Network (IN) applications. One or more addresses in a trigger address list corresponding to the existing subscription trigger profiles have an address of SCP 112. SCP 112 hosts the existing IN application deployed by the operator. FIGS. 5 to 7 describe various embodiments for providing the NVAS to subscriber 106 using the existing subscription trigger profile.

Intelligent system 102 further includes an Interceptor unit 118, an Intelligent Voice Interactive Unit (IVIU) 120, and a database 122. Interceptor unit 118, IVIU 120, and database 122 communicate with each other over a packet switched connection, such as an Internet Protocol connection. In an embodiment of the present invention, Interceptor unit 118 is an Intelligent Service Control Point (ISCP). In an embodiment of the present invention, IVIU 120 is one of an Intelligent Peripheral (IP), a Service Resource Point (SRP), an Interactive Voice Response (IVR) system, and a combination thereof. IVIU 120 provides an ISUP interface and a voice interface to VMSC 114. Interceptor unit 118 is coupled to VMSC 114 through an interface, such as, but not limited to, an Intelligent Network Application Part (INAP) interface, an Advanced Intelligent Network (AIN) protocol interface, a Wireless Intelligent Network (WIN) protocol interface, Customized applications for mobile network enhanced logic Application Part (CAP) interface, and an ISUP interface.

In an embodiment of the present invention, intelligent system 102 includes one or more standby Interceptor units to provide a failover support, if Interceptor unit 118 fails. The standby Interceptor units implement the same functionality as Interceptor unit 118. Interceptor unit 118 and the standby Interceptor units have a single Global Title (GT) and a Signal Point Code (SPC).

When subscriber 106 makes a call to the recipient from his mobile handset, Interceptor unit 118 intercepts a voice circuit associated with the call, and holds the voice circuit for a pre-defined time interval, hereinafter referred to as an interval T, while the voice circuit is connected to VMSC 114. In an exemplary case, system 100 sets the time interval T as 10 seconds. IVIU 120 prompts subscriber 106 to make an indication of service selection within the time interval T. Hereinafter, the indication of service selection may, interchangeably, be referred to as a postfix. System 100 may prompt subscriber 106 by either playing a "beep sound", or by playing a warning message, such as "You have 10 seconds to select a service". The postfix corresponds to a value added service which subscriber 106 wants to obtain. In an embodiment of the present invention, the postfix can be the same as a prefix used by the operator for providing the value added service through service application 104. In an exemplary case, if the operator uses "*" as the prefix for Voice SMS service, system 100 may implement the Voice SMS service with the postfix "*". Subscriber 106 may enter a postfix corresponding to an end key, such as "#", if subscriber 106 does not wish to select any value added service, but instead wishes to continue the call as a normal call to the recipient. In one embodiment of the present invention, subscriber 106 may end the postfix with the end key "#".

In an embodiment of the present invention, the prompt is a voice menu. In an exemplary case, the voice menu can be:
"Please enter your service selection from the following options within 10 seconds

One for Voice SMS
Two for VoIP
Three for Rich Talk
Four for Color SMS
Five for USSD call back
# to continue the call as a normal call."

In this case, the service selection is indicated in the form of a menu choice. The voice menu overcomes a problem of subscriber 106 not remembering postfixes for one or more value added services. System 100 may configure the voice menu based on preferences of subscriber 106 or the operator's specification, or any combination thereof. For example, if subscriber 106 marks one or more value added services as favorite services, the voice menu includes menu choices corresponding to the favorite services only.

However, in some countries (e.g. Brazil), due to regulation, the operator may not be allowed to present a menu choice for carrier selection for fear that the order could constitute a preference favor of one carrier over another. In this case, the caller can be explicitly prompted for a service selection, e.g. "Please enter your carrier selection code".

Another example of the voice menu is a carrier selection menu:
"Please enter your carrier selection from the following options:

One for TIM-Brazil
Two for ViVo-Brazil
Three for Brazil Telecom"

In one embodiment of the present invention, system 100 may specify a default operator if subscriber 106 does not enter a valid carrier selection within the time interval T. In another embodiment of the present invention, system may not specify a default operator due to regulatory restrictions. Then system 100 prompts subscriber 106 to select a carrier, by playing a carrier selection message, such as "Please enter your carrier selection code" without presenting a menu to subscriber 106.

System 100 maintains a mapping, in the form of a mapping table, of one or more indications of service selection and corresponding one or more service applications in database 122. In addition to the mapping, database 122 stores one or more prefixes corresponding to the one or more service applications. Depending on the determined service application, Interceptor unit 118 prefixes a corresponding prefix to the called number of the recipient. Table 1 depicts an exemplary mapping table between the indications of service selection and the service applications.

**Table 1**

| Indication of service selection (P) | Prefix (P') | Service application |
|---|---|---|
| 1 | * | Voice SMS |
| 2 | ** | VoIP |
| 3 | 12345 | Rich Talk |
| 4 | 222 | Color SMS |
| 5 | 9876 | USSD call back |
| 6 | 555 | Music/song recognition |
| 7 | 667 | Voice recognition |
| 8 | 778 | Lie detection |
| 9 | 885 | Emotion recognition |
| 10 | 862 | Media addition |

It will be apparent to a person skilled in the art that Table 1 is a non-exhaustive representation of the mapping table. System 100 can utilize existing prefix based service applications by prefixing the recipient's number with a prefix corresponding to the existing prefix based service application. If system 100 chooses to employ same postfix as the prefix of service application 104, such as "*" for Voice SMS, system 100 can simply prefix the recipient's number with the indication of service selection, i.e. "*". Alternatively, if the postfix and the prefix of service application 104 are different, system 100 translates the postfix to the prefix for service application 104 using the mapping table. For example, if subscriber 106 enters the menu choice "1" for selecting the Voice SMS service, system 100 translates the indication of service selection "1" to "*" and prefixes it to the recipient's number.

In one embodiment of the present invention, IVIU 120 re-prompts subscriber 106 to make a new indication of service selection, if subscriber 106 made an invalid indication of service selection or did not enter any indication of service selection within the time interval T in a first attempt. In an embodiment of the present invention, IVIU 120 re-prompts subscriber 106 for a pre-defined number of attempts. In other words, subscriber 106 has the pre-defined number of attempts to make the new indication of service selection. In an exemplary case, IVIU 120 allows subscriber 106 two attempts to make the new indication of service selection. In another embodiment of the present invention, when subscriber 106 makes the invalid indication of service selection in the first attempt, Interceptor unit 118 drops the call without allowing subscriber 106 to make the new indication of service selection. If subscriber 106 makes an invalid indication of service selection for all pre-defined number of attempts, Interceptor unit 118 drops the call, in accordance with an embodiment of the present invention. In another embodiment of the present invention, Interceptor unit 118 treats the call as a normal call or a call with a default value of carrier selection, if subscriber 106 makes an invalid indication of service selection for all pre-defined number of attempts. In one embodiment of the present invention, Interceptor unit 118 treats the call as a normal call or a call with a default value of carrier selection, when subscriber 106 does not make the indication of service selection in the time interval T.

In accordance with an embodiment of the present invention, Interceptor unit 118 can apply one or more filtering criteria on the call, before processing the call. The one or more filtering criteria include, but are not limited to, the subscriber's roaming condition, the recipient's number, the subscriber's number, a blacklist, a white list, time, historical events. When the filtering criteria are met, Interceptor unit 118 routes the call back to VMSC 114. In another embodiment of the present invention, VMSC 114 applies the filtering criteria before routing the call to Interceptor unit 118. Furthermore, if subscriber 106 directly dials a valid prefixed called number, indicating a valid service selection, Interceptor unit 118 routes the call back to VMSC 114 and VMSC 114 routes the call further according to the operator's existing configuration.

The in-band NVASS needs to set up the voice circuit associated with the call from subscriber 106 to IVIU 120 to allow subscriber 106 to enter the postfix for selecting the service application. When IVIU 120 has an Intelligent Peripheral (IP) capability and Interceptor unit 118 can issue IN commands, such as a Connect-To-Resource (CTR), to VMSC 114 to direct VMSC 114 to establish the voice circuit with IVIU 120 and to play prompts to obtain an indication of service indication from subscriber 106. VMSC 114 would not count this connection as part of a Call Detail Record (CDR) of the call so does not charge subscriber 106 for this connection. Therefore, this is desirable interface. However, if IVIU 120 does not have an IP capability, and Interceptor unit 118 issues an explicit connection messages, such as INAP Connect or INAP Establish Temporary Connection (ETC) to VMSC 114 for connecting the voice circuit to IVIU 120, then VMSC 114 starts generating a CDR from an instant the voice circuit is connected to IVIU 120. Consequently, subscriber 106 is billed for the duration subscriber 106 is required to make the indication of service selection, even though the recipient has not answered the call. Therefore, to avoid charging subscriber 106 for this duration, the operator deploying the in-band NVASS may implement a special billing solution. In an embodiment of the present invention, the operator may offer a first interval of a mobile originated call, equal to the time interval T, free to subscriber 106 at the HPMN. The operator (i.e. the HPMN) may also extend the offer to roaming subscribers if the roaming subscribers roam for a minimum duration. In another embodiment of the present invention, the operator's billing system reconciles the CDR at VMSC 114 with a CDR maintained at Interceptor unit 118. Interceptor unit 118 starts generating a CDR the moment the recipient answers the call. Interceptor unit 118 may use various parameters, such as call reference number, subscriber's number, recipient's number, time-stamps of the call, subscriber's International Mobile Subscriber Identity (IMSI), for reconciling CDRs. In another embodiment of the present invention, Interceptor unit 118 may create an exact billing record at VMSC 114, by issuing a message, such as an INAP Furnish Charging Information (FCI) to VMSC 114, as soon as subscriber 106 enters the indication of service selection. After receiving the FCI message VMSC 114, resets a timer in the CDR, hence the CDR starts only when the recipient answers the call.

In an embodiment of the present invention, the in-band NVASS may charge subscriber 106 according to one time usage of the NVAS. The in-band NVASS may also offer the NVAS to subscriber 106 as a premium subscription service with a monthly subscription fee. The monthly subscription fee may vary depending on usage of subscriber 106 of the NVAS. The operator may also offer discounts to subscriber 106, when subscriber 106 uses the NVAS more than a predefined limit.

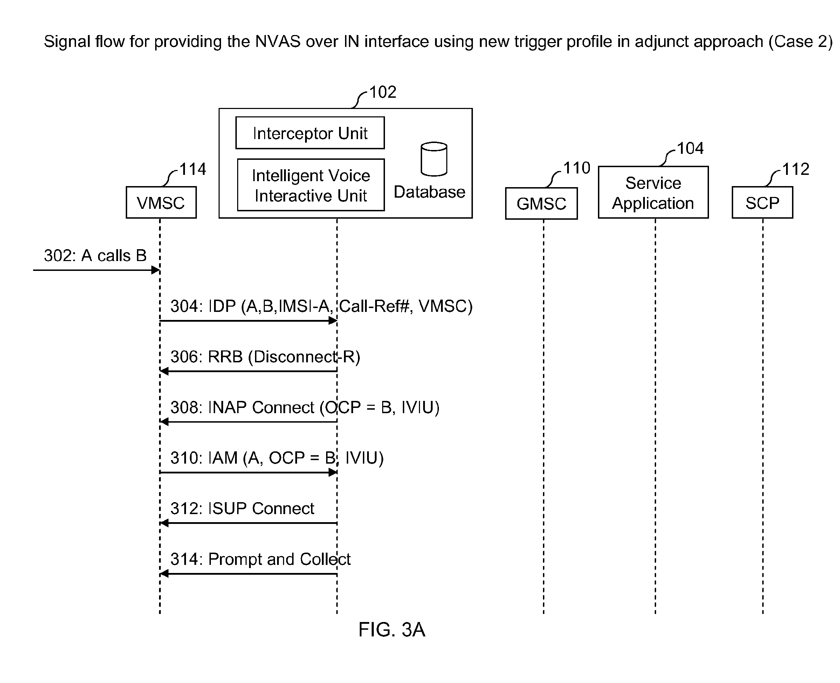

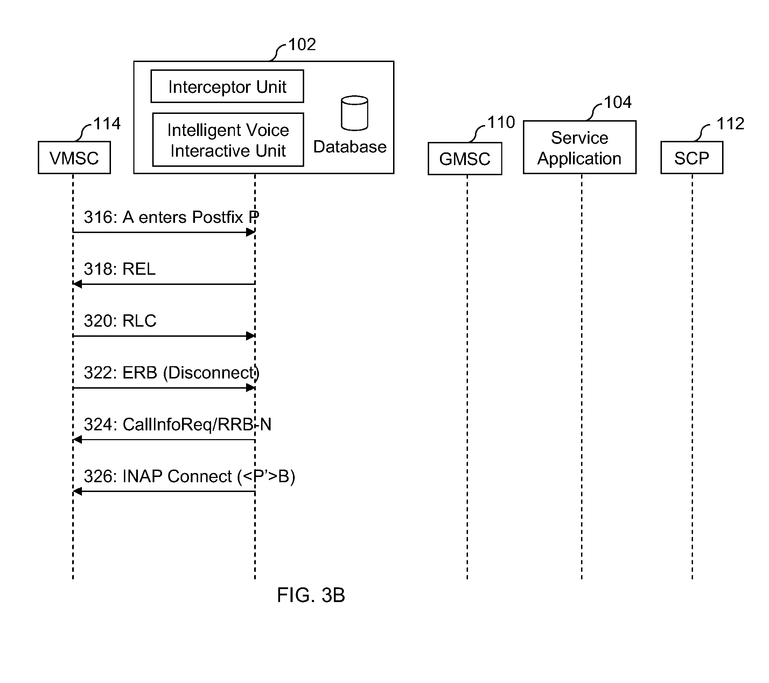

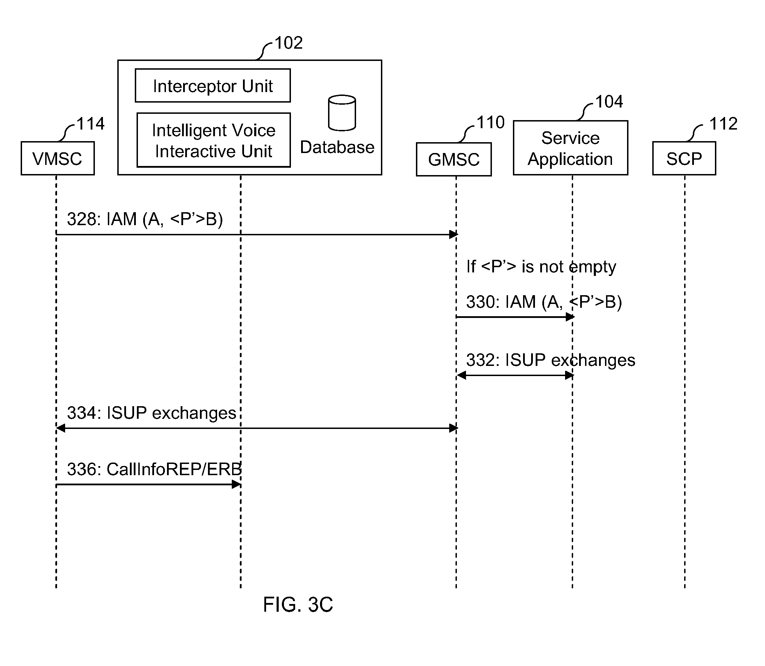

As mentioned earlier, the in-band NVASS allows Interceptor unit 118 to be coupled to VMSC 114 via an INAP interface. FIGS. 2 and 3 illustrate various embodiments when Interceptor unit 118 and VMSC 114 communicate over the INAP interface. FIGS. 2A, 2B, and 2C represent a signal flow for providing the NVAS to subscriber 106 over the INAP interface using the NVAS trigger profile in the adjunct approach, in accordance with a first embodiment of the present invention. Subscriber 106 (i.e. A) has already subscribed to the NVAS and now calls a recipient B using either his phone address book, or the phone number list, or the phone pad, without dialing any prefix. At step 202, the call reaches VMSC 114. VMSC 114 obtains the address of Interceptor unit 118 from the NVAS trigger profile of the subscriber A. Thereafter, at step 204, VMSC 114 passes a call control associated with the call to Interceptor unit 118 using a message, such as an INAP Initial Detection Point (IDP) message. VMSC 114 sends various parameters related to the call, such as, but not limited to, a calling number of the subscriber A, a called number of the recipient B, an IMSI of the subscriber A, a call reference number, and an address of VMSC 114, in the INAP IDP message. Interceptor unit 118 determines whether the NVAS is applicable for the called number B using application logics. For example, the NVAS is not applicable to the recipient number B, if the recipient number B already is prefixed with a prefix, such as "*", "#", or <short number>, present in the mapping table maintained in database 122. The NVAS is also inapplicable, if the recipient number B is shorter than a pre-defined length, or if the recipient number B belongs to a blacklist of the subscriber A. Interceptor unit 118 may also apply any combination of the above-mentioned application logics. If Interceptor unit 118 determines that the NVAS is applicable to the recipient number B, Interceptor unit 118, at step 206, intercepts the voice circuit associated with the call, by instructing VMSC 114 to connect the voice circuit to IVIU 120, using a message such as, an INAP Connect To Resource (CTR), [CTR (IVIU)].

Thereafter, at step 208, VMSC 114 sets up the voice circuit with IVIU 120, by sending a message, such as an ISUP Initial Address Message, IAM (A, IVIU). At step 210, IVIU 120 acknowledges the set up of the voice circuit, by sending an ISUP Connect message to VMSC 114. Thereafter, at step 212, Interceptor unit 118 instructs IVIU 120 to prompt the subscriber A to make the indication of service selection, by requesting VMSC 114 to relay messages, such as an INAP Play Announcement (PlayAnn) message, and an INAP Prompt and Collect User Information (PCUI) message, to IVIU 120. Upon receipt of the PlayAnn and PCUI messages, IVIU 120 voice prompts the subscriber A. The voice prompt may be a "beep sound", or a warning message, such as "You have 10 seconds to select a service", or a voice menu with one or more menu choices as explained in conjunction with FIG. 1.

Thereafter, at step 214, the subscriber A enters the indication of service selection, hereinafter referred to as P. The subscriber A enters P by pressing one or more keys on the phone pad corresponding to P, in one embodiment of the present invention. In another embodiment of the present invention, the subscriber A may utter the indication of service selection, if IVIU 120 is capable of speech recognition. In an embodiment of the present invention, when IVIU 120 sends the voice menu to the subscriber A, P is one of the menu choices, such as "One". In another embodiment of the present invention, P is same as a prefix corresponding to an existing prefix-based service application deployed by the operator. Interceptor unit 118 checks whether P is a valid indication of service selection using the mapping table stored in database 122. Interceptor unit 118, at step 216, instructs VMSC 114 to release the voice circuit connected to IVIU 120 using an INAP Disconnect Forward Connection (DFC) message. Thereafter, at step 218, VMSC 114 issues an ISUP Release (REL) message to IVIU 120 to release the voice circuit connected between IVIU 120 and VMSC 114. Thereafter, at step 220, IVIU 120 sends an ISUP Release Complete (RLC) message to VMSC 114 to confirm the release of the voice circuit. Furthermore, at step 222, Interceptor unit 118 requests call information from VMSC 114, by sending an INAP Call Information Request (CallInfoReq) message to VMSC 114. The call information includes call duration, stop time, and release cause. Alternatively, at step 222, Interceptor unit 118 sends an INAP Request Report Basic call state model (RRB) message to VMSC 114 to monitor call-related events. The call-related events include, but are not limited to, an answer event, a disconnect event, a busy event, and a no-answer event. Interceptor unit 118 uses either the call information or the call-related event report for maintaining billing records.

Furthermore, Interceptor unit 118 determines a service application corresponding to the indication of service selection using the mapping table stored in database 122. Depending on the service application, Interceptor unit 118 prefixes a called number of the recipient B with P'. When P is same as a prefix corresponding to the prefix-based service application, P is used as P'. If P is different from the prefix, Interceptor unit 118 translates P to P' using the mapping. In an exemplary case, when P is the menu choice "One", P' is set to "*". In addition, when the subscriber A does not make the indication of service selection in the interval T or P is invalid, P' is empty, thereby directing VMSC 114 to treat the call as a normal call in these cases. Thereafter, at step 224, Interceptor unit 118 directs VMSC 114 to route the call to the prefixed called number (<P'>B) for initiating the service application, by issuing an INAP Connect (<P'>B) message, to VMSC 114. Thereafter, at step 226, VMSC 114 routes the call to GMSC 110, by issuing a message, such as an ISUP IAM (A, <P'>B), to GMSC 110. Thereafter, at step 228, GMSC 110 connects the call with service application 104, by relaying the ISUP IAM (A, <P'>B) message to service application 104, if P' is not empty. In other words, GMSC 110 sets up the voice circuit with service application 104. It will be apparent to a person skilled in the art, that at steps 230 and 232, service application 104, GMSC 110, and VMSC 114 exchange various ISUP messages to provide the value added service to the subscriber A through service application 104.

When service application 104 is a non call-related service application, service application 104 disconnects the voice circuit between the subscriber A and service application 104, in accordance with an embodiment of the present invention. Thereafter, service application 104 sends a service message to the subscriber A, requesting content corresponding to service application 104. The service message is one of a Short Message Service (SMS), an Unstructured Supplementary Service Data (USSD), an Instant Message (IM), a Push to Talk (PTT) message and a Wireless Application Part (WAP) push message, a Hypertext Transfer Protocol (HTTP) push message, and a Uniform Resource Locator (URL). The subscriber A sends the content to service application 104 in a reply to the service message. Thereafter, service application 104 provides the subscriber A desired value added service using the content. Finally, at step 234, VMSC 114 sends the call information requested by Interceptor unit 118 at step 222, in a message, such as INAP Call Information Report (CallInfoREP). Alternatively, VMSC 114 informs Interceptor unit 118 of the call-related events using an INAP Event Report Basic call state model (ERB) message, when VMSC 114 receives the INAP RRB message at step 222.

If Interceptor unit 118, at step 204, determines that, the NVAS is not applicable to the called number B, Interceptor unit 118, at step 206, routes the call control back to VMSC 114, by issuing an INAP Connect (A, <P'>B) message, with an empty P', to VMSC 114. Thereafter, steps 226 to 234 complete the call flow.

It will be apparent to a person skilled in the art that, in an embodiment of the present invention, when Interceptor unit 118 and VMSC 114 communicate using the CAP interface, a call from the subscriber to the recipient follows similar signal flows as described above, with various INAP messages replaced by corresponding CAP messages. Furthermore, in accordance with various embodiment of the invention, it would be apparent to a person skilled in the art that, all messages exchanged between various system components are purely for explanation purposes, and hence other types of messages conforming to the protocol under consideration may also be used.

FIGS. 3A, 3B, and 3C represent a signal flow for providing the NVAS to the subscriber A over the INAP interface using the NVAS trigger profile in the adjunct approach, in accordance with a second embodiment of the present invention. The embodiment enables system 100 to provide the NVAS to the subscriber A, when IVIU 120 does not support Intelligent Network (IN) protocol. The subscriber A calls the recipient B using either his phone address book, or the phone pad, or the phone number list, without dialing any prefix. At step 302, the call reaches VMSC 114. VMSC 114 obtains the address of Interceptor unit 118 from the NVAS trigger profile of the subscriber A. Thereafter, at step 304, VMSC 114 passes a call control associated with the call to Interceptor unit 118 using an INAP IDP message. VMSC 114 sends various parameters related to the call, such as, but not limited to, a calling number of the subscriber A, a called number of the recipient B, an IMSI of the subscriber A, a call reference number, and an address of VMSC 114. Interceptor unit 118 employs one or more combinations of application logics to determine whether the NVAS is applicable to the called number B, as explained in conjunction with FIG. 2. If the NVAS is applicable to the called number B, Interceptor unit 118, at step 306, requests VMSC 114 to report a disconnect event for an outgoing leg in the call, by issuing a message, such as an INAP RRB (Disconnect-R) message to VMSC 114. The outgoing leg here corresponds to the setup of the voice circuit with IVIU 120. In addition, at step 308, Interceptor unit 118 instructs VMSC 114 to connect to IVIU 120 using an INAP Connect (OCP = B, IVIU) message for intercepting the voice circuit associated with the call. Interceptor unit 118 informs VMSC 114 in the INAP Connect message that Original Called Party (OCP) is the recipient's number B. Thereafter, at step 310, VMSC 114 connects the voice circuit with IVIU 120 using an ISUP IAM (A, OCP = B, IVIU) message. Thereafter, at step 312, IVIU 120 sends an ISUP Connect message to VMSC 114 to acknowledge connection of the voice circuit.

Thereafter, at step 314, IVIU 120 prompts the subscriber A to make an indication of service selection within the time interval T. At step 316, the subscriber A makes the indication of service selection, i.e. P, over the voice circuit. IVIU 120 collects P and sends P to Interceptor unit 118. Interceptor unit 118 checks whether P is a valid indication of service selection using the mapping table stored in database 122 and if found valid, determines a corresponding service application. Thereafter, IVIU 120, at step 318, releases the voice circuit between VMSC 114 and IVIU 120, by sending a message, such as an ISUP REL message to VMSC 114. Thereafter, at step 320, VMSC 114 sends an ISUP RLC message to IVIU 120 to acknowledge the release of the voice circuit. Thereafter, at step 322, VMSC 114 informs Interceptor unit 118 about disconnection of the outgoing leg of the call, i.e. the release of the voice circuit between IVIU 120 and VMSC 114, using a message such as an INAP ERB (Disconnect). Thereafter, at step 324, Interceptor unit 118 requests call information from VMSC 114, by sending an INAP CallInfoReq message to VMSC 114. The call information includes call duration, stop time and release cause. Alternatively, at step 324, Interceptor unit 118 sends an INAP RRB message to VMSC 114 to monitor call-related events. The call-related events include, but are not limited to, an answer event, disconnect event, a busy event, and a no-answer event. Interceptor unit 118 uses either the call information or the call-related events for maintaining billing records.

Depending on the service application, determined at step 316, Interceptor unit 118 prefixes a called number of the recipient B with P'. When P is same as a prefix corresponding to the existing prefix-based service application, Interceptor unit 118 uses P to prefix the called number B. If P is different from the prefix, Interceptor unit 118 determines P' from the mapping table stored in database 122. In an exemplary case, when P is the menu choice "One", P' equals "*" as illustrated in Table 1. In addition, if the subscriber A does not make the indication of service selection in interval T or the subscriber A makes an invalid indication of service selection, P' is empty, so that VMSC 114 routes the call as a normal call to the called number B. Thereafter, Interceptor unit 118, at step 326, issues an INAP Connect (<P'>B) message to VMSC 114, to instruct VMSC 114 to route the call to the prefixed called number (<P'>B) for initiating the service application. Thereafter, at step 328, VMSC 114 routes the call to GMSC 110 using an ISUP IAM (A, <P'>B) message. Thereafter, if P' is not empty, i.e. the subscriber A selected a valid service application, GMSC 110, at step 330, relays the ISUP IAM (A, <P'>B) message to service application 104 for initiating service application 104. To provide the value added service to the subscriber A, service application 104, GMSC 110, and VMSC 114 exchange various ISUP messages at steps 332 and 334. Finally, at step 336, VMSC 114 sends the call information requested by Interceptor unit 118 at step 324, using an INAP CallInfoREP m message. Alternatively, VMSC 114 informs Interceptor unit 118 of the call-related events in a message, such as an INAP ERB message.

When Interceptor unit 118, at step 304, determines that, the NVAS is not applicable to the called number B, Interceptor unit 118, at step 306, routes the call control back to VMSC 114, by issuing an INAP Connect (A, <P'>B) message, with an empty P', to VMSC 114. Thereafter, steps 328 to 336 complete the call flow.

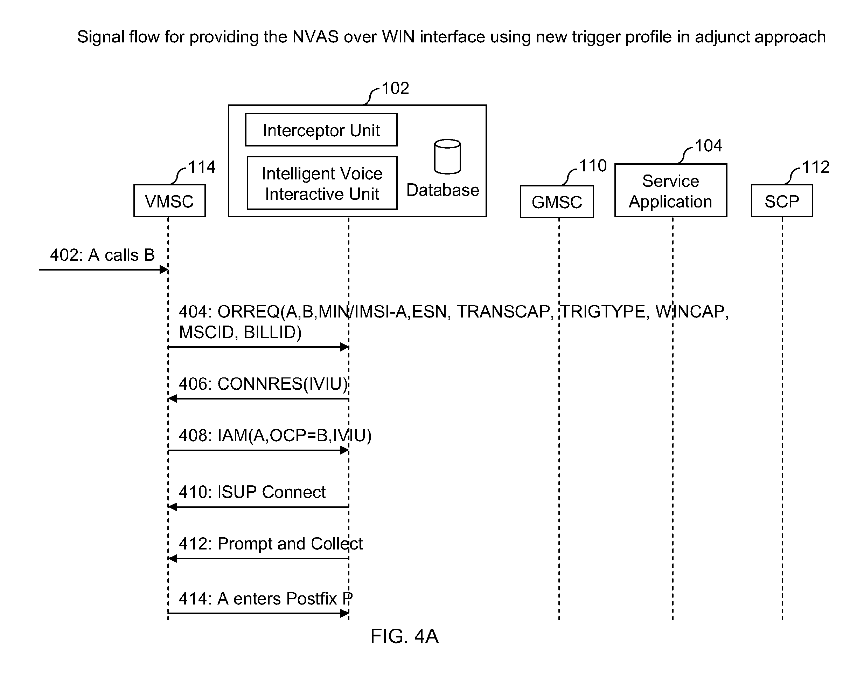

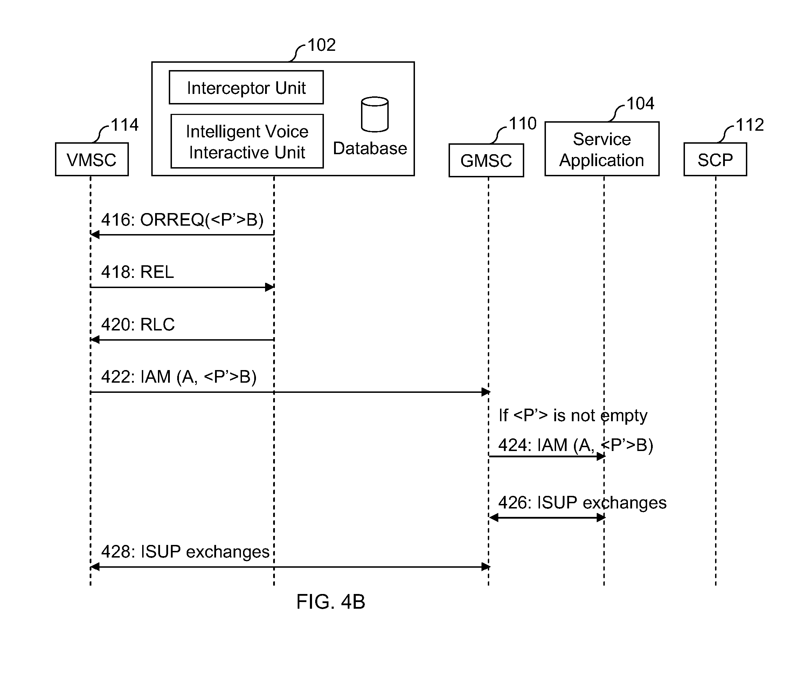

In one embodiment of the present invention, Interceptor unit 118 and VMSC 114 may communicate over a WIN interface. The operator defines a new NVAS WIN trigger profile. FIGS. 4A and 4B represent a signal flow for providing the NVAS to the subscriber A over a WIN interface using the NVAS WIN trigger profile in the adjunct approach, in accordance with an embodiment of the present invention. A call from the subscriber A to the recipient B reaches VMSC 114 at step 402. Thereafter, at step 404, VMSC 114 passes a call control associated with the call to Interceptor unit 118 using a WIN Origination Request (ORREQ) message. VMSC 114 passes various WIN parameters related to the call, for example, a calling number of the subscriber A, a called number of recipient B, a Mobile Identification Number (MIN) associated with the subscriber A, trigger type (TRIGTYPE), a Billing Identification (BILLID), and a Mobile Switching Center Identification (MSCID). The IN protocol equivalents of the WIN parameters MIN, BILLID and MSCID are IMSI, Call-Ref# and address of VMSC 114, respectively. Interceptor unit 118 determines whether the NVAS is applicable to the called number B using one or more application logics. If Interceptor unit 118 determines, that the NVAS is applicable to the called number B, Interceptor unit 118, at step 406, instructs VMSC 114 to connect to IVIU 120 using a message, such as a WIN Connect Resource message, CONNRES (IVIU) message. Thereafter, at step 408, VMSC 114 issues an ISUP IAM (A, OCP = B, IVIU) message to IVIU 120 to connect a voice circuit associated with the call to IVIU 120. VMSC 114 informs IVIU 120 in the ISUP IAM message that Original Called Party (OCP) is the recipient's number B. Thereafter, at step 410, IVIU 120 returns an ISUP Connect message to VMSC 114 to acknowledge the setup of the voice circuit.

After the voice circuit is established, IVIU 120, at step 412, prompts the subscriber A to make an indication of service selection within the time interval T. Thereafter, at step 414, the subscriber A makes the indication of service selection i.e. the postfix P over the voice circuit. IVIU 120 collects and sends P to Interceptor unit 118. Using the mapping table stored in database 122, Interceptor unit 118 checks whether P is a valid indication of service selection, and if found valid, determines a corresponding service application. Furthermore, Interceptor unit 118 edits the called number by prefixing P' to the called number like, <P'>B, with <P'> being selected from the mapping table. Thereafter, at step 416, IVIU 120 instructs VMSC 114 to connect the call to the prefixed called number, by issuing a WIN origination request result response (orreq) message (i.e. a call connection instruction), orreq (<P'>B), to VMSC 114. If the subscriber A fails to enter P within the time interval T or enters an invalid P, P' is set to empty to treat the call as a normal call to the called number B. Thereafter, at step 418, VMSC 114 releases the voice circuit from IVIU 120 using an ISUP REL message so that VMSC 114 can connect the voice circuit to service application 104. IVIU 120, at step 420, confirms the release of the voice circuit, by sending a message, such as an ISUP RLC message to VMSC 114. Thereafter, at step 422, VMSC 114 issues an ISUP IAM (A, <P'>B) message to GMSC 110 for routing the call to GMSC 110. Thereafter, at step 424, GMSC 110 relays the ISUP IAM (A, <P'>B) message to service application 104 for initiating service application 104, if P' is not empty. Finally, to provide the value added service to the subscriber A, service application 104, GMSC 110, and VMSC 114 exchange various ISUP messages at steps 426 and 428.

If Interceptor unit 118, at step 404, determines that the NVAS is not applicable to the called number B, Interceptor unit 118, at step 406, routes the call control back to VMSC 114, using a WIN orreq (A, <P'>B) message, with an empty P', so that VMSC 114 treats the call as a normal call to the called number B. Thereafter, steps 418 to 422 complete the call flow.

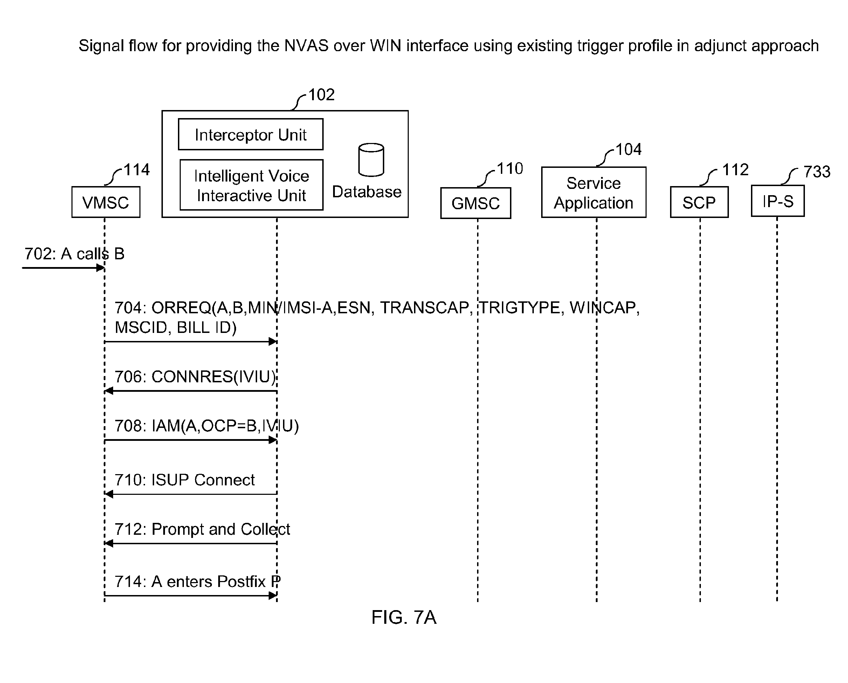

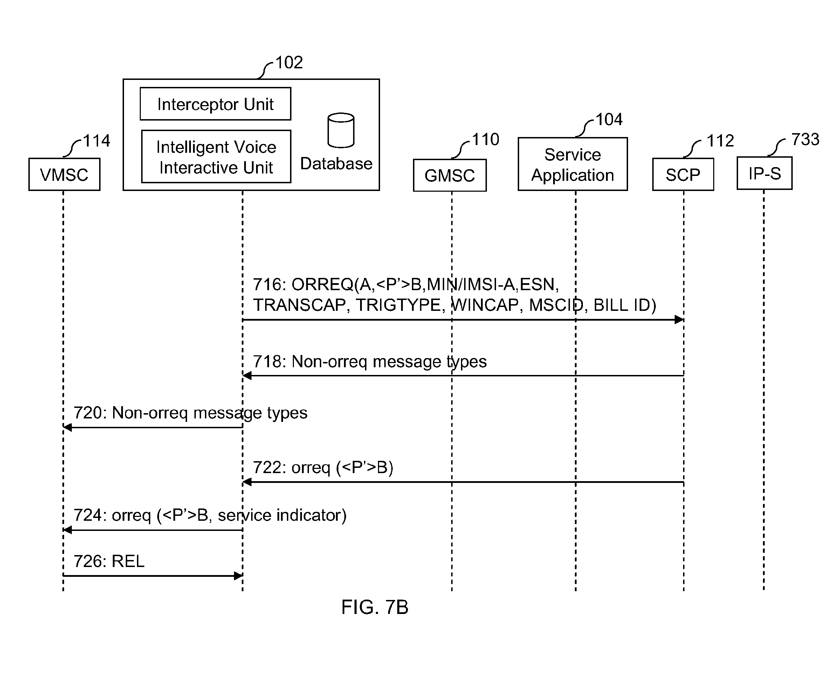

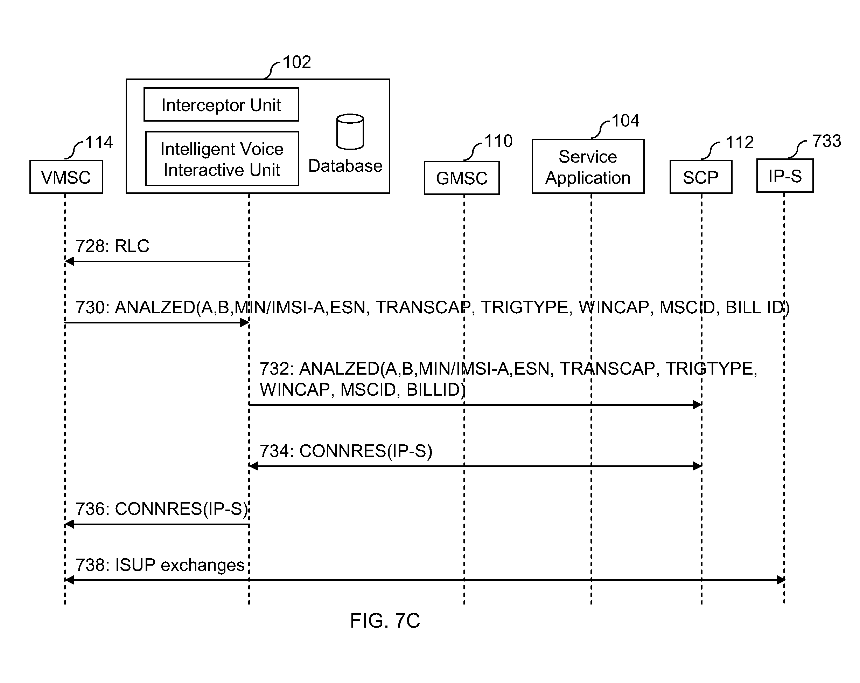

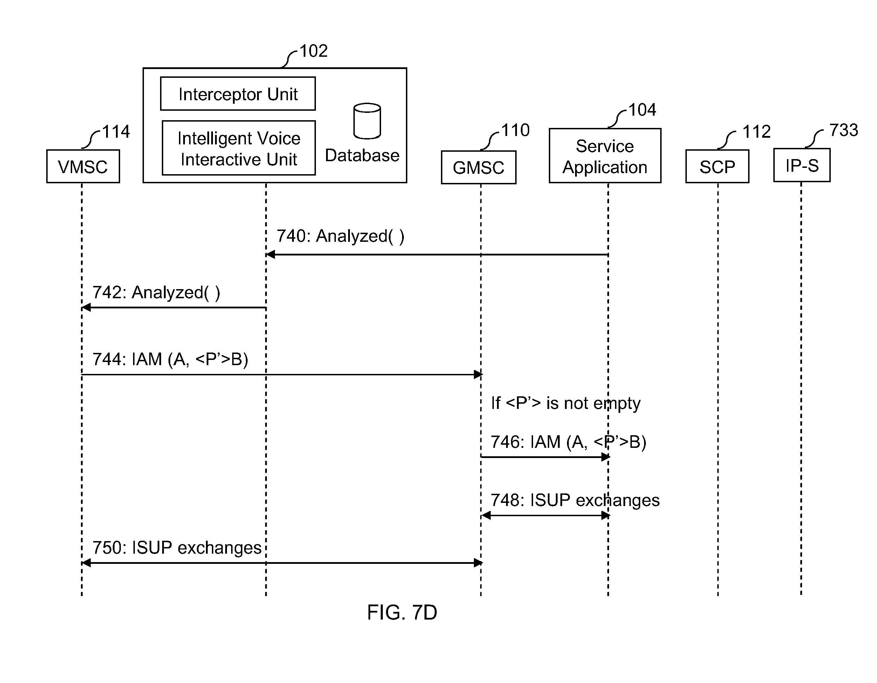

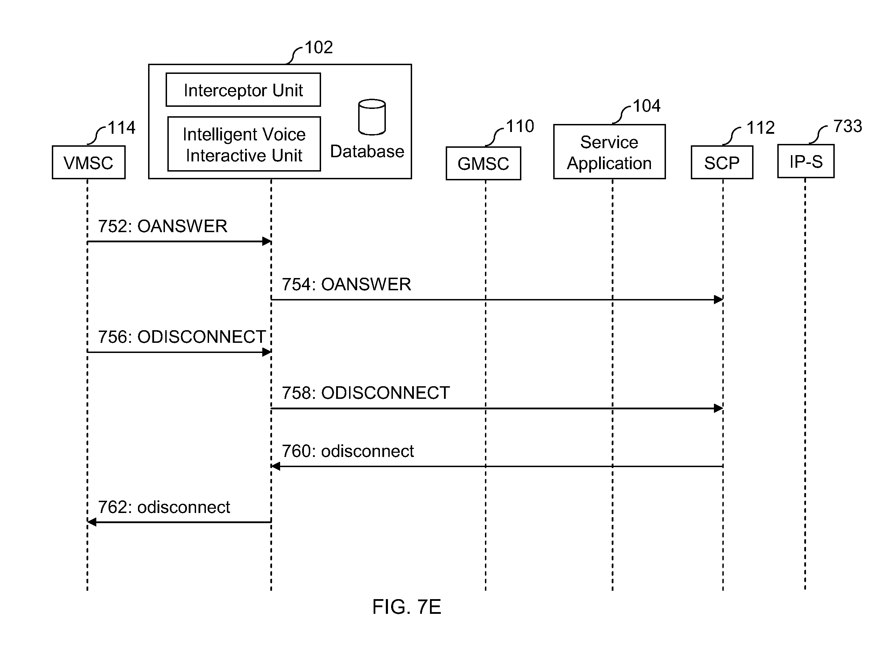

In accordance with an embodiment of the present invention, instead of defining the new NVAS trigger profile, the operator may use an existing subscription trigger profile of subscriber 106, stored in HLR 108, for providing the NVAS. The operator may do so in order to avoid cost of defining the NVAS trigger profile in HLR 108. In this case, Interceptor unit 118 relays SCCP messages between VMSC 114 and SCP 112 defined in the existing subscription trigger profile. In an embodiment of the present invention, the in-band NVASS replaces an address of SCP 112 in a trigger address list, defined in the existing subscription trigger profile, with the address of Interceptor unit 118 so that Interceptor unit 118 can intercept the voice circuit associated with the call. The subscriber must register for the NVAS for the trigger address list to be modified. In another embodiment of the present invention, system 100 does not modify the trigger address list. Instead, system 100 configures one of VMSC 114, GMSC 110, and a Signal Transfer Point (STP) to redirect SCCP messages originating from VMSC 114, to Interceptor unit 118 using either Global Title (GT), or Message Transfer Part (MTP) routing. The embodiment allows the operator to save cost of performing changes in HLR 108, because the operator only needs to perform routing changes in either VMSC 114, or GMSC 110, or the STP. FIGS. 5 and 7 illustrate various embodiments corresponding to providing the NVAS to subscriber 106 using the existing subscription trigger profile.

FIGS. 5A, 5B, and 5C represent a signal flow for providing the NVAS to the subscriber A over the INAP interface using the existing subscription trigger profile in the adjunct approach, in accordance with a first embodiment of the present invention. The subscriber A has already subscribed to the NVAS and now calls the recipient B using either his phone address book, or the phone pad, or the phone number list without any prefix. The call reaches VMSC 114 at step 502. Thereafter, at step 504, VMSC 114 passes a call control associated with the call, along with the same parameters related to the call, to Interceptor unit 118 using a message, such as an INAP IDP message. The parameters include, but are not limited to, a calling number of the subscriber A, a called number of the recipient B, an IMSI of the subscriber A, a call reference number, and an address of VMSC 114. As described earlier in conjunction with FIG. 2, Interceptor unit 118 determines whether the NVAS is applicable to the called number B using a combination of one or more application logics. When Interceptor unit 118 determines that, the NVAS is applicable, Interceptor unit 118, at step 506, sends an INAP CTR message, CTR (IVIU), to VMSC 114 for instructing VMSC 114 to connect the voice circuit associated with the call to IVIU 120. Thereafter, VMSC 114 sets up the voice circuit with IVIU 120, at step 508, using a message, such as an ISUP IAM (A, IVIU) message. Thereafter, at step 510, IVIU 120 responds to VMSC 114, by sending an ISUP Connect message. In addition, at step 512, Interceptor unit 118 requests VMSC 114 to relay messages, such as, INAP PlayAnn message, and INAP PCUI message, to IVIU 120 to instruct IVIU 120 to prompt the subscriber A to make the indication of service selection. Upon receipt of the PlayAnn and PCUI messages, IVIU 120 voice prompts the subscriber A. The voice prompt may be a "beep sound", or a warning message, such as "You have 10 seconds to select a service", or a voice menu with one or more menu choices. Thereafter, at step 514, the subscriber A enters the indication of service selection, i.e. P. Interceptor unit 118 determines whether P is valid using the mapping table stored in database 122. Thereafter, Interceptor unit 118 determines a corresponding service application from the valid P. If P is valid or if the subscriber A does not enter the indication of service selection, Interceptor unit 118, at step 516, releases the voice circuit from IVIU 120, by issuing an INAP DFC message to VMSC 114. Thereafter, at step 518, VMSC 114 issues an ISUP REL message to IVIU 120 to release the voice circuit connected to IVIU 120. Thereafter, at step 520, IVIU 120 confirms the release of the voice circuit by sending a message, such as an ISUP RLC message, to VMSC 114.

Thereafter, at step 522, Interceptor unit 118 relays the INAP IDP message to SCP 112 after replacing the called number B with a prefixed called number <P'>B, after Interceptor unit 118 determines P', as described earlier. In addition, Interceptor unit 118 changes a calling address in the IDP message to the address of Interceptor unit 118. P' is empty if the subscriber A fails to make the indication of service selection in the time interval T or if P is invalid. In this case, Interceptor unit 118 may not replace the calling address in the IDP message so that future INAP messages exchanged by SCP 112 and VMSC 114 bypass Interceptor unit 118 and normal call continues. Since the calling address in the IDP message is changed to the address of Interceptor unit 118, SCP 112, at step 524, sends INAP messages to Interceptor unit 118. Thereafter, at step 526, Interceptor unit 118 relays the IN messages to VMSC 114 with an exception of an INAP Continue (CUE) message. This is done because Interceptor unit 118 needs to direct VMSC 114 to route the call to the prefixed called number. Furthermore, Interceptor unit 118 sends an INAP CallInfoReq message, or an INAP RRB message to VMSC 114, if the INAP messages received from SCP 112 at step 524 did not include either the INAP CallInfoReq, or the INAP RRB message. Interceptor unit 118 uses a response of VMSC 114 to these messages for maintaining billing records for the call. If Interceptor unit 118 receives the INAP CUE message at step 524, Interceptor unit 118, at step 528 issues an INAP Connect message to VMSC 114 for directing VMSC 114 to route the call to the prefixed called number (<P'>B) to initiate the service application. Thereafter, at step 530, VMSC 114 routes the call to GMSC 110 using an ISUP IAM (A, <P'>B) message. Thereafter, at step 532, GMSC 110 relays the ISUP IAM (A, <P'>B) message to service application 104, if P' is not empty. Thereafter, at steps 534 and 536, service application 104, GMSC 110, and VMSC 114 exchange various ISUP messages to provide the value added service to the subscriber A through service application 104. Finally, at step 538, VMSC 114 responds to the INAP CallInfoReq message, or the INAP RRB message, received at step 526, by sending an INAP CallInfoREP message or an INAP ERB message, respectively.

If Interceptor unit 118, at step 504, determines that, the NVAS is not applicable to the called number B, Interceptor unit 118, at step 506, relays the INAP IDP message to SCP 112 without changing the called party address. Thereafter, steps 522 to 530 complete the call flow, with the INAP messages exchanged between SCP 112 and VMSC 114 bypassing Interceptor unit 118. Thus, the call is routed according to the operator's existing configuration.

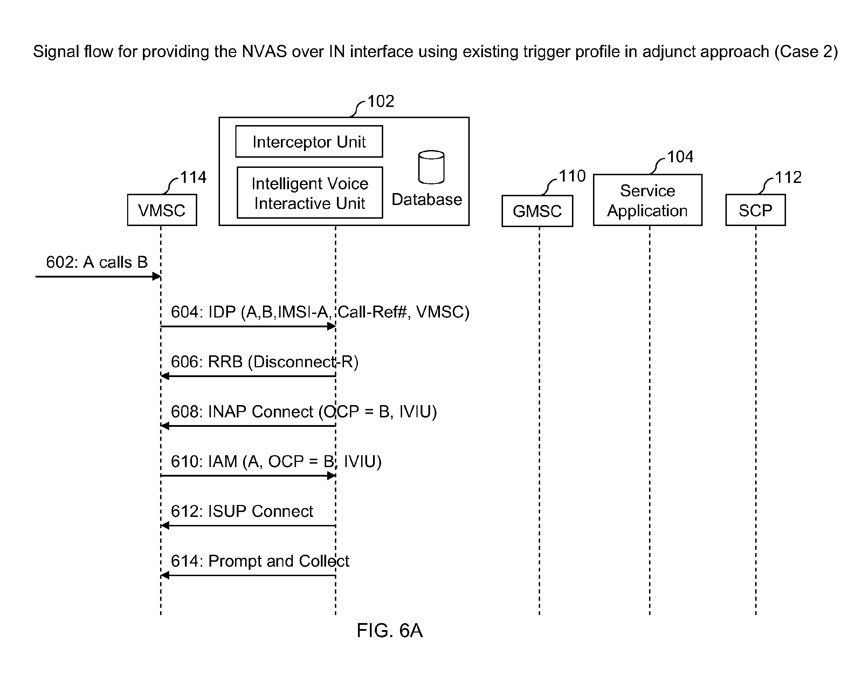

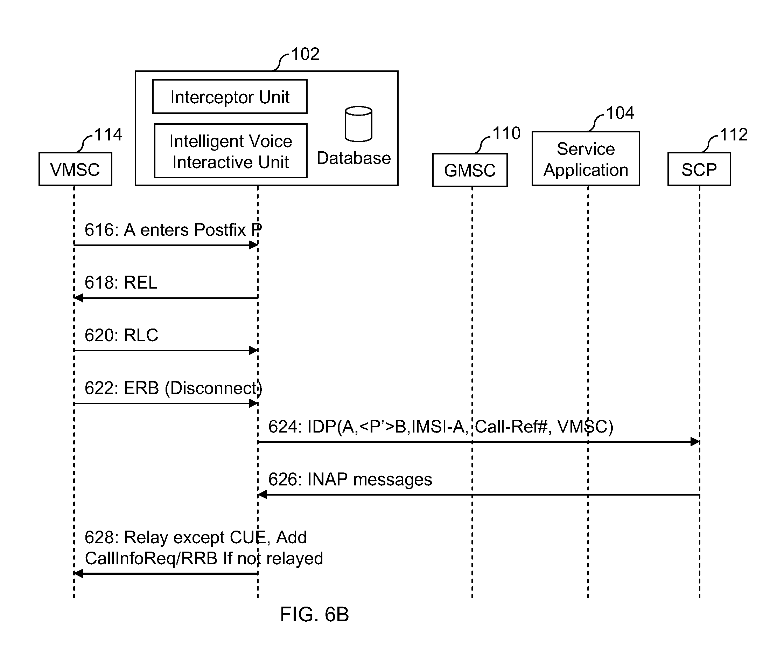

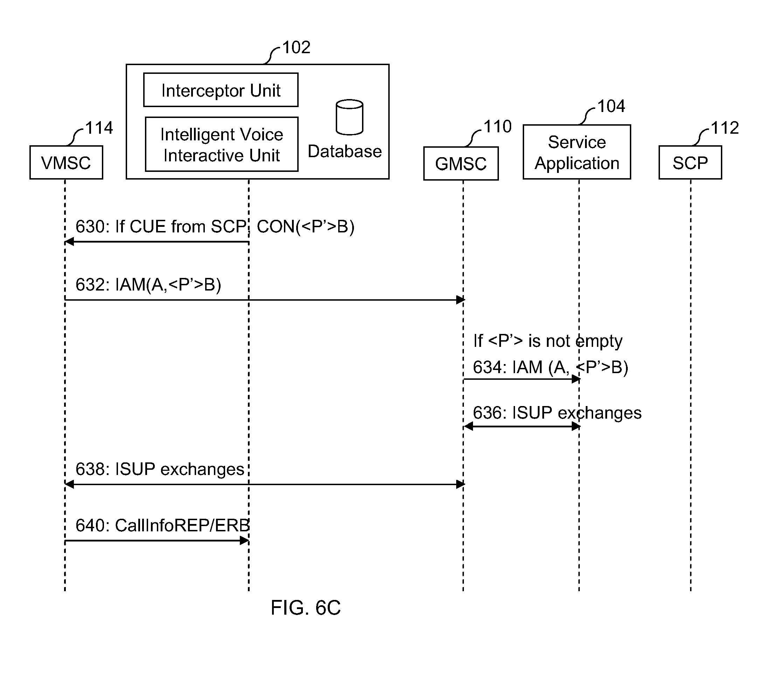

As explained in conjunction with FIG. 3, system 100 is able to provide the NVAS to the subscriber A, even when IVIU 120 is not IN protocol compliant. FIGS. 6A, 6B, and 6C represent a signal flow for providing the NVAS to the subscriber A over the INAP interface using the existing subscription trigger profile in the adjunct approach, in accordance with a second embodiment of the present invention. The subscriber A calls the recipient B directly from his phone address book, the phone list, or the phone pad. At step 602, the call reaches VMSC 114. Thereafter, at step 604, VMSC 114 passes a call control associated with the call to Interceptor unit 118 using a message, such as an INAP IDP message. VMSC 114 passes various parameters related to the call, such as, but not limited to, a calling number of the subscriber A, a called number of the recipient B, an IMSI of the subscriber A, a call reference number, and an address of VMSC 114. Interceptor unit 118 uses a combination of one or more application logics to determine whether the NVAS is applicable to the called number B. If the NVAS is applicable to the called number B, Interceptor unit 118 decides to set up the voice circuit with IVIU 120 to prompt the subscriber A for the indication of service selection. For this, at step 606, Interceptor unit 118 requests a disconnect event report for an outgoing leg in the call from VMSC 114, by issuing an INAP RRB (Disconnect-R) message to VMSC 114. The outgoing leg here corresponds to the setup of the voice circuit with IVIU 120. Thereafter, at step 608, Interceptor unit 118 instructs VMSC 114 to set up a voice circuit associated with the call to IVIU 120, by sending a message, such as an INAP Connect (OCP = B, IVIU) message. Thereafter, at step 610, VMSC 114 sends an ISUP IAM (A, OCP = B, IVIU) message to set up the voice circuit with IVIU 120. Thereafter, at step 612, IVIU 120 acknowledges to VMSC 114 through an ISUP Connect message.

Thereafter, at step 614, IVIU 120 prompts the subscriber A to make an indication of service selection within the time interval T. The subscriber A, at step 616, makes the indication of service selection i.e. postfix P over the voice circuit. IVIU 120 collects and sends P to Interceptor unit 118. Interceptor unit 118 checks whether P is valid using the mapping table stored in database 122. In addition, Interceptor unit 118 determines a corresponding service application from P. Thereafter, IVIU 120, at step 618, releases the voice circuit, by sending a message, such as an ISUP REL message to VMSC 114. Thereafter, at step 620, VMSC 114 confirms the release of the voice circuit by sending an ISUP RLC message to IVIU 120. Thereafter, at step 622, VMSC 114 informs Interceptor unit 118 the release of the voice circuit through an INAP ERB (Disconnect) message.

Thereafter, at step 624, Interceptor unit 118 relays the INAP IDP message to SCP 112 after replacing the called number B with a prefixed called number <P'>B. When P is same as a prefix corresponding to the prefix-based service application, Interceptor unit 118 prefixes P to the called number B. If P is different from the prefix corresponding to the prefix-based service application, Interceptor unit 118 determines P' from the mapping table stored in database 122. In an exemplary case, when P is the menu choice "One", P' equals "*" as illustrated in mapping table 1. In addition, when P is invalid or the subscriber A does not make the indication of service selection in the time interval T, P' is kept empty so that the call is treated as a normal call. Further, Interceptor unit 118 changes a calling address in the IDP message to the address of Interceptor unit 118 to route all future INAP messages issued by SCP 112 through Interceptor unit 118. If P' is empty, Interceptor unit 118 may not replace the calling address in the IDP message so that the future INAP messages exchanged by SCP 112 and VMSC 114 bypass Interceptor unit 118 to continue normal call. At step 626, Interceptor unit 118 receives various INAP messages from SCP 112 intended for VMSC 114. Interceptor unit 118 then, relays the IN messages to VMSC 114, at step 628, with an exception of an INAP CUE message. This is done because Interceptor unit 118 needs to direct VMSC 114 to route the call to the prefixed called number instead of the called number. Furthermore, to create billing records, Interceptor unit 118 sends an INAP CallInfoReq message, or an INAP RRB message to VMSC 114, if SCP 112 did not send either the INAP CallInfoReq message, or the INAP RRB message. When Interceptor unit 118 receives the INAP CUE message at step 626, Interceptor unit 118, at step 630, issues an INAP Connect message to VMSC 114 for directing VMSC 114 to route the call to the prefixed called number (<P'>B) to initiate the service application. Thereafter, at step 632, VMSC 114 issues an ISUP IAM (A, <P'>B) message to GMSC 110 for routing the call to GMSC 110. If P' is not empty, GMSC 110, at step 634, routes the call further to service application 104, by relaying the ISUP IAM (A, <P'>B) message to service application 104. In other words, when the subscriber A has selected a valid service application, GMSC 110 routes the call to the selected service application. Thereafter, at step 636, service application 104 provides the value added service to the subscriber A, by exchanging with GMSC 110, various ISUP messages, that are relayed by GMSC 110 to VMSC 114 at step 638. Finally, at step 640, VMSC 114 responds to the INAP CallInfoReq message, or the INAP RRB message, received at step 628, by sending an INAP CallInfoREP message or an INAP ERB message, respectively.

If Interceptor unit 118, at step 604, determines that, the NVAS is inapplicable to the called number B, Interceptor unit 118, at step 606, relays the INAP IDP message to SCP 112 without changing the called number B and the calling party address. Thereafter, steps 626 to 632 complete the call flow, with the INAP messages exchanged between SCP 112 and VMSC 114 bypassing Interceptor unit 118. Thus, the call is routed according to the operator's existing configuration.

In one embodiment of the present invention, the in-band NVASS can use an existing subscription WIN trigger profile if Interceptor unit 118 and VMSC 114 are coupled using the WIN interface. In an embodiment of the present invention, the in-band NVASS does not modify the existing WIN trigger profile. Instead, the in-band NVASS configures one of VMSC 114, GMSC 110, and an STP to redirect SCCP messages to Interceptor unit 118 using either GT, or MTP routing. In another embodiment of the present invention, the in-band NVASS sets one or more addresses corresponding to one or more WIN triggers, in a trigger address list to the address of Interceptor unit 118. Some examples of WIN triggers are origination answer trigger, origination disconnect trigger, no answer trigger, and calling routing address available trigger.

FIGS. 7A to 7E represent a signal flow for providing the NVAS to the subscriber A over the WIN interface, using the existing subscription WIN trigger profile in the adjunct approach, in accordance with an embodiment of the present invention. The embodiment sets the addresses corresponding to all WIN triggers to the address of Interceptor unit 118. At step 702, a call from the subscriber A to the recipient B reaches VMSC 114. Thereafter, at step 704, VMSC 114 passes a call control and one or more WIN parameters associated with the call to Interceptor unit 118 using a message, such as a WIN Origination Request (ORREQ) message. The WIN parameters include, but are not limited to, a calling number of the subscriber A, a called number of the recipient B, a Mobile Identification Number (MIN) associated with the subscriber A, trigger type (TRIGTYPE), a call reference number (i.e. BILLID), and an address of VMSC 114 (i.e. MSCID). Interceptor unit 118 determines whether the NVAS is applicable to the called number B, using the application logics as explained in conjunction with FIG. 2. If the NVAS is applicable, Interceptor unit 118, at step 706, intercepts a voice circuit associated with the call, by instructing VMSC 114 to connect to IVIU 120 using a WIN CONNRES (IVIU) message. Thereafter, at step 708, VMSC 114 sets up the voice circuit with IVIU 120, using an ISUP IAM (A, OCP = B, IVIU) message. Thereafter, at step 710, IVIU 120 acknowledges to VMSC 114 using a message, such as an ISUP Connect message.

Once the voice circuit is established, IVIU 120, at step 712, voice prompts the subscriber A to make an indication of service selection within the time interval T. The voice prompt may be a "beep sound", or a warning message, such as "You have 10 seconds to select a service", or a voice menu with one or more menu choices. At step 714, the subscriber A makes the indication of service selection P. IVIU 120 collects and sends P to Interceptor unit 118. Using the mapping table stored in database 122, Interceptor unit 118 checks whether P is a valid indication of service selection, and if found valid, determines a corresponding service application. Furthermore, Interceptor unit 118 generates a prefixed called number, <P'>B, by selecting <P'> from the mapping table, where <P'> corresponds to the service application. If the subscriber A does not make the indication of service selection in the time interval T or if P is invalid, Interceptor unit 118 adds an empty prefix to the called number, i.e. P' is empty. Thereafter, at step 716, Interceptor unit 118 relays the WIN ORREQ message to SCP 112 after replacing the called number B with the prefixed called number <P'>B. In addition, Interceptor unit 118 changes a calling address in the WIN ORREQ message to the address of Interceptor unit 118 to route all future WIN messages issued by SCP 112 through Interceptor unit 118. At step 718, SCP 112 sends one or more WIN messages to Interceptor unit 118, in response to the WIN ORREQ message received at step 716. Thereafter, at step 720, Interceptor unit 118 relays the WIN messages to VMSC 114, with an exception of a WIN origination request return result (orreq) message. At step 722, SCP 112 sends a WIN orreq (<P'>B) message to Interceptor unit 118 as a response to the WIN ORREQ message received at step 716, for instructing Interceptor unit 118 to continue the call to the prefixed called number. Thereafter, Interceptor unit 118 relays the WIN orreq message to VMSC 114 for directing VMSC 114 to route the call to service application 104. Interceptor unit 118 inserts a service indicator that indicates a pre-paid service, in the WIN orreq message if the subscriber A is a pre-paid subscriber so that VMSC 114 informs SCP 112 about call establishment and call disconnection events. This helps SCP 112 to bill the subscriber A in real-time for the duration of his call to service application 104. Thereafter, at step 726, VMSC releases the voice circuit from Interceptor unit 118 using an ISUP REL message. Thereafter, at step 728, Interceptor unit 118 acknowledges to VMSC 114, by sending an ISUP RLC message.

Since the service indicator is set to the pre-paid service, VMSC 114, at step 730, sends call information to Interceptor unit 118 in a message, such as a WIN Analyzed (ANALZED) message, to request call-handling information from SCP 112. The call information includes for example, a calling number of the subscriber A, a called number of recipient B, a Mobile Identification Number (MIN) associated with the subscriber A, trigger type (TRIGTYPE), a call reference number (i.e. BILLID), WIN Capability of VMSC 114 (WINCAP), and an address of VMSC 114 (i.e. MSCID). At step 732, Interceptor unit 118 relays the WIN ANALZED message to SCP 112. SCP 112 determines that an IP coupled to SCP, hereinafter denoted by IP-S 733, needs to play an announcement to the subscriber A about his current pre-paid balance. Therefore, at step 734, SCP 112 issues a WIN CONNRES to Interceptor unit 118 for directing VMSC 114 to set up the voice circuit between VMSC 114 and IP-S 733. Thereafter, at step 736, Interceptor unit 118 relays the WIN CONNRES message to VMSC 114. Thereafter, at step 738, VMSC 114 exchanges one or more ISUP messages with IP-S 733 over the voice circuit. ISUP messages include announcement about the current pre-paid balance of the subscriber A. At step 740, SCP 112 sends an acknowledgment of WIN ANALZED message, to VMSC 114 using a WIN Analyzed return result (Analyzed) message. At step 742, Interceptor unit 118 relays WIN Analyzed message to VMSC 114.

Thereafter, at step 744, VMSC 114 routes the call to GMSC 110 using a message, such an ISUP IAM (A, <P'>B) message, for routing the call to service application 104. If P' is not empty, indicating a valid service selection, then GMSC 110, at step 746, relays the ISUP IAM (A, <P'>B) message to service application 104 to initiate service application 104. Thereafter, at steps 748 and 750, service application 104, and VMSC 114 exchange various ISUP messages via GMSC 110 to provide the value added service corresponding to service application 104 to the subscriber A. When the call is established with service application 104, the origination answer trigger, indicating the recipient answering the call, is initiated at VMSC 114. Thereafter, at step 752, VMSC 114 informs SCP 112 of the call establishment, by sending a WIN Origination Answer (OANSWER) message to Interceptor unit 118. At step 754, Interceptor unit 118 relays the WIN OANSWER message to SCP 112 so that SCP 112 can start decrementing from the current pre-paid balance of the subscriber A. Upon disconnection of the call, the origination disconnection trigger is initiated at VMSC 114. Thereafter, at step 756, VMSC 114 sends a WIN Origination Disconnect (ODISCONNECT) message, to Interceptor unit 118 to inform SCP 112 of the call disconnection. At step 758, Interceptor unit 118 relays the WIN ODISCONNECT message to SCP 112. Thereafter, SCP 112 stops decrementing the current pre-paid balance of the subscriber A. Thereafter, at step 760, SCP 112 acknowledges Interceptor unit 118 in the form of a message, such as a WIN origination disconnect return response (odisconnect) message. Finally, at step 762, Interceptor unit 118 relays the acknowledgement, i.e. the WIN odisconnect message, to VMSC 114. Hence, the prepaid subscriber is billed only for the duration of his connection to service application 104.

Instead of modifying the trigger address list for all WIN triggers, system 100 modifies the trigger address list corresponding to a first set of WIN triggers only, in accordance with an embodiment of the present invention. For the rest of WIN triggers, denoted by a second set of WIN triggers, corresponding trigger address list retains the address of SCP 112. VMSC 114 and SCP 112 exchange WIN messages corresponding to the first set of WIN triggers through Interceptor unit 118. On the other hand, VMSC 114 and SCP 112 directly exchange WIN messages corresponding to the second set of WIN triggers. In an embodiment of the present invention, the first set of WIN triggers includes WIN triggers corresponding to origination of all calls. Thus, VMSC 114 and SCP 112 exchange only a WIN ORREQ message and responses to the WIN ORREQ message through Interceptor unit 118, in accordance with one embodiment of the present invention. Other WIN messages exchanged between VMSC 114 and SCP 112, such as the WIN ANALZED, the WIN CONNRES, the Analyzed, the ISUP messages, the OANSWER, and the ODISCONNECT, exchanged at steps 730, 734, 740, 748, 752, 756 and 762, respectively, bypass Interceptor unit 118. In another embodiment of the present invention, the first set of WIN triggers includes only a first trigger interaction. In accordance with an embodiment of the present invention, only the WIN ORREQ message at step 722 is relayed through Interceptor unit 118. In yet another embodiment of the present invention, the first set of WIN triggers includes only a call origination trigger and subsequent WIN messages are not relayed through Interceptor unit 118. In the embodiment, at step 716, Interceptor unit 118 directs VMSC 114 to route the call to the prefixed call number, <P'>B, by issuing a WIN ORREQ message, WIN ORREQ (<P'>B), to VMSC 114. In addition, Interceptor unit 118 sends an original trigger address list with the address of SCP 112 as the trigger address for subsequent WIN triggers. Steps 726 to 762 complete the signal flow with VMSC 114 and SCP 112 exchanging the WIN messages directly.

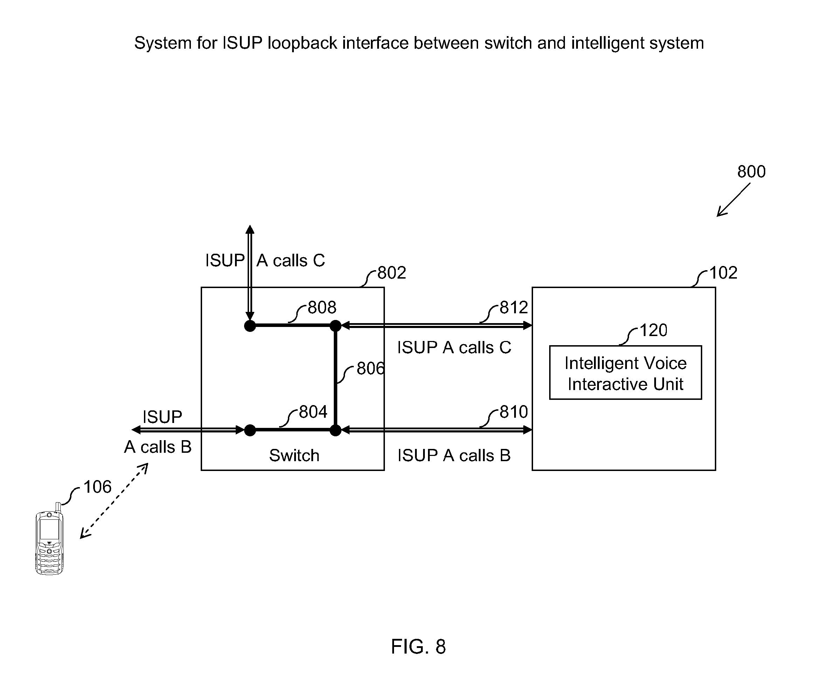

The operator may not be able to support IN protocol either due to IN license or cost considerations of IN infrastructure. In such a case, the operator may implement an ISUP interface between operator's switch infrastructure and intelligent system 102, thereby allowing the operator to provide the NVAS without incurring unnecessary overheads. FIG. 8 illustrates a subsystem 800 depicting an ISUP loop-back implementation of the ISUP interface between the switch and intelligent system 102, in accordance with an embodiment of the present invention. Subsystem 800 includes switch 802 and intelligent system 102. Switch 802 includes voice trunks 804, 806, and 808 forming a hard coded loop-back of voice circuits at switch 802. Switch 802 may be either VMSC 114, or GMSC 110. Subsystem 800 further includes signaling links 810 and 812 for coupling switch 802 and intelligent system 102. Switch 802 is configured to route all the calls originating from subscriber 106 over the hard coded loop-back circuits at switch 802. In one embodiment of the present invention, intelligent system 102 functions as a virtual service node. When switch 802 receives a call connection request, from the subscriber's number A to the recipient's number B, switch 802 routes the call connection request, ISUP A calls B, over signaling link 810 to intelligent system 102. Intelligent system 102 performs call-processing necessary for providing the NVAS, and returns a call control instruction i.e. ISUP A calls C, to loop-backed voice trunk 808 via signaling link 812 for an outgoing leg of the call. Switch 802 then, routes the call to the outgoing leg.

A person skilled in the art would recognize that the switch infrastructure of the operator and IVIU 120 are still coupled via a voice trunk. The in-band NVASS is able to provide the NVAS to subscriber 106 using the ISUP loop-back interface. The operator must statically allocate a set of loop-back circuits at the switch, and must configure the switch to route all mobile originated calls by the subscriber over the set of loop-back circuits with SCCP messages corresponding to the mobile originated calls to Interceptor unit 118. In an embodiment of the present invention, switch 802 is VMSC 114.

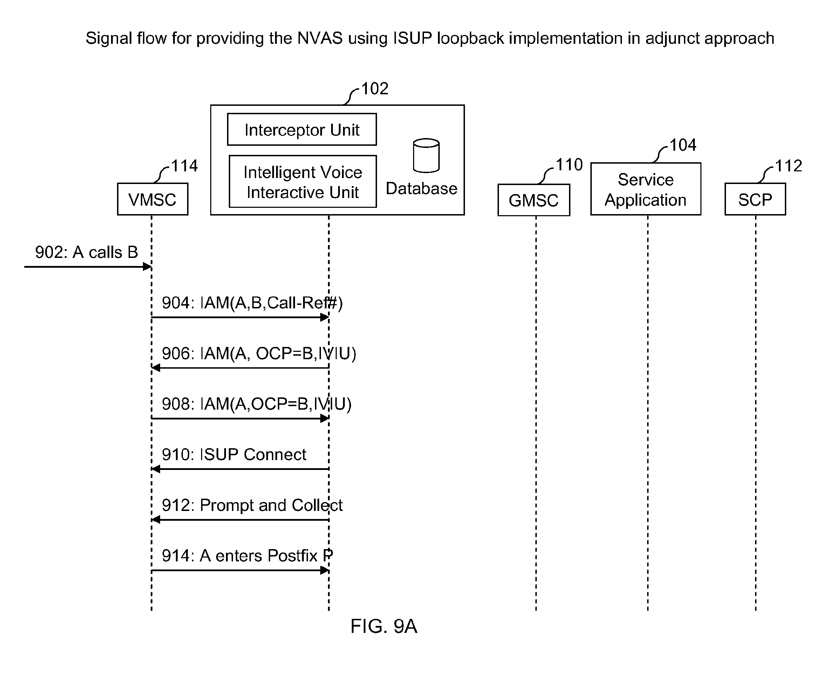

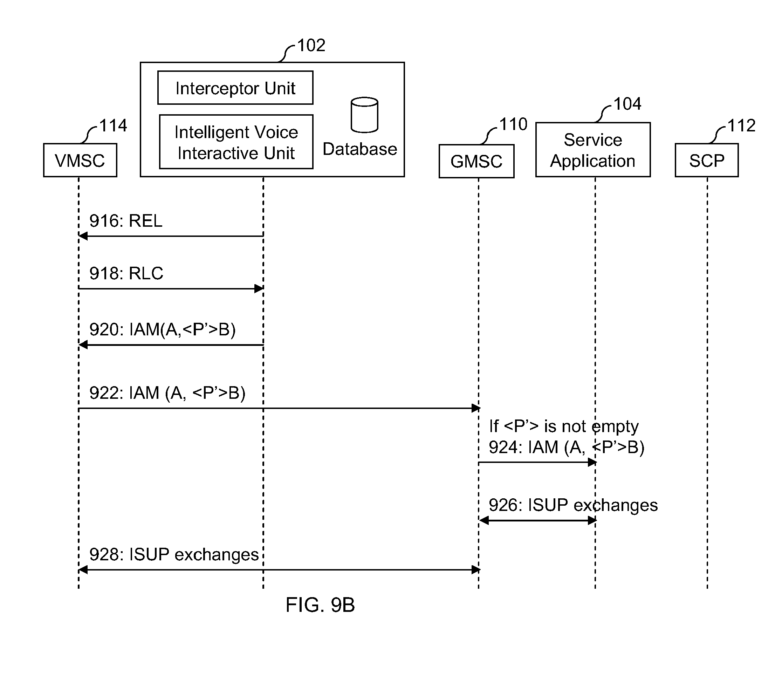

FIGS. 9A and 9B represent a signal flow for providing the NVAS to the subscriber A using the ISUP loop-back implementation in the adjunct approach, in accordance with an embodiment of the present invention. The subscriber A makes a call to the recipient B. At step 902, the call reaches VMSC 114. Thereafter, at step 904, VMSC 114 sends a call connection request to Interceptor unit 118, in the form of a message, such as an ISUP IAM (A, B, Call-Ref#) message, over signaling link 810. As explained earlier in conjunction with FIG. 2, Interceptor unit 118 checks whether the NVAS is applicable to the called number B using a combination of one or more application logics. If the NVAS is applicable to the called number B, Interceptor unit 118, at step 906, sets up a voice circuit associated with the call with IVIU 120, by sending an ISUP IAM (A, OCP=B, IVIU) message to VMSC 114. Thereafter, at step 908, VMSC 114 sets up the voice circuit with IVIU 120 using a message, such as an ISUP IAM (A, OCP=B, IVIU) message. IVIU 120, at step 910, sends an ISUP Connect message to VMSC 114 to acknowledge the set up of the voice circuit.

Thereafter, at step 912, IVIU 120 prompts the subscriber A over the voice circuit to make an indication of service selection within the time interval T. In an embodiment of the present invention, the prompt is a beep sound. In another embodiment of the present invention, the prompt is a warning message, such as "You have 10 seconds to select a service". In yet another embodiment of the present invention, the prompt is a voice menu. The subscriber A makes the indication of service selection i.e. P at step 914. IVIU 120 passes P to Interceptor unit 118. Interceptor unit 118 determines whether P is a valid indication of service selection using the mapping table stored in database 122. In addition, Interceptor unit 118 determines a service application corresponding to P, if P is valid. Thereafter, IVIU 120, at step 916, releases the voice circuit, by issuing an ISUP REL message to VMSC 114. Thereafter, at step 918, VMSC 114 confirms the release of the voice circuit to IVIU 120 using an ISUP RLC message. After determining that P is a valid indication of service selection, Interceptor unit 118 prefixes the called number B using a prefix P' as explained earlier in conjunction with FIG. 2. If Interceptor unit 118 determines that P is an invalid indication of service selection or the subscriber A fails to enter P within the time interval T, Interceptor unit 118 sets P' as the end key "#". This avoids looping the voice circuit of the call back to Interceptor unit 118 and makes VMSC 114 to treat the call as a normal call. Thereafter, at step 920, Interceptor unit 118 directs VMSC 114 to route the call to the prefixed called number, <P'>B, by sending an ISUP IAM (A, <P'>B) message to VMSC 114 over signaling link 812 for initiating service application 104 corresponding to P. Thereafter, at step 922, VMSC 114 issues the ISUP IAM (A, <P'>B) message to GMSC 110 for routing the call to service application 104. If P' is "#", VMSC 114 strips "#" before issuing the ISUP IAM message to GMSC 110 so that GMSC 110 routes the call to the called number B. Thereafter, at step 924, GMSC relays the ISUP IAM (A, <P'>B) message to service application 104, if P' is not empty. Finally, at steps 926 and 928, service application 104 and VMSC 114 exchange one or more ISUP messages via GMSC 110 for initiating the value added service provided by service application 104.

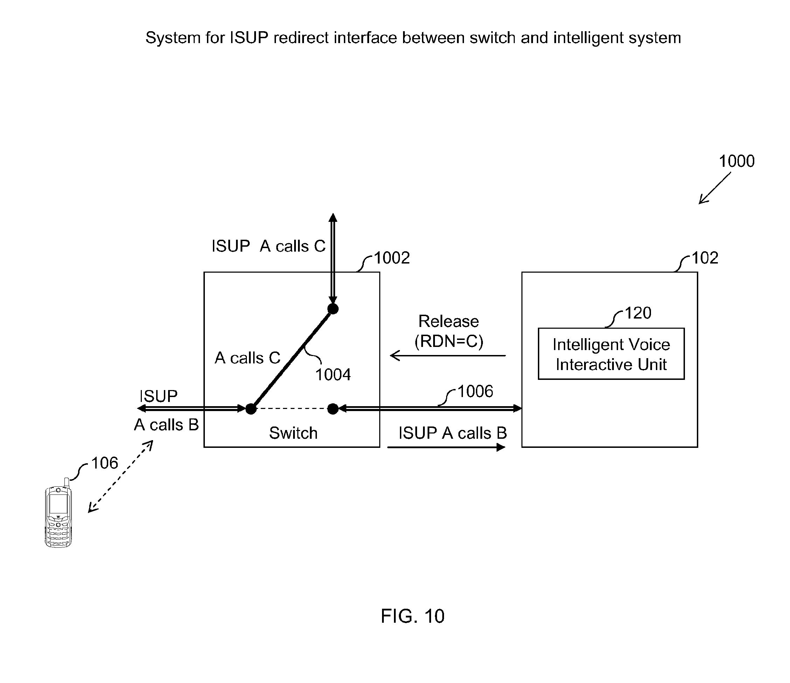

However, the ISUP loop-back implementation requires double the number of ports in the switch for processing the call that are otherwise needed to process the call without loop-back implementation. Furthermore, the operator must pre-allocate a set of loop-back circuits for the NVASS. To overcome these problems, the operator may choose to implement the ISUP interface between the switch infrastructure and intelligent system 102 using an ISUP redirect approach. FIG. 10 illustrates a subsystem 1000 depicting an ISUP redirect implementation of the ISUP interface between the switch and intelligent system 102, in accordance with an embodiment of the present invention. Subsystem 1000 includes switch 1002 and intelligent system 102. Switch may be either VMSC 114, or GMSC 110. Switch 1002 is capable of redirecting a current switch port to a redirection number using a link 1004. Switch 1002 uses either Release Link Trunking (RLT) technique, or Release-To-Pivot (RTP) technique for redirecting the current switch port. Subsystem 1000 further includes a singling link 1006 for coupling switch 1002 and intelligent system 102. As mentioned before, intelligent system 102 functions as a virtual service node, in one embodiment of the present invention. When switch 1002 receives a call connection request, from the subscriber's number A to the recipient's number B, switch 1002 routes the call connection request, ISUP A calls B, over signaling link 1006 to intelligent system 102. Intelligent system 102 performs necessary call processing for providing the NVAS, and returns a Redirection Number (RDN) to switch 1002, ISUP Release (RDN = C), over signaling link 1006 for an outgoing leg of the call. This indicates that the call from A to B is now redirected to C. Switch 1002 then, routes the call to the outgoing leg by redirecting voice trunk 1004 at the current switch port.

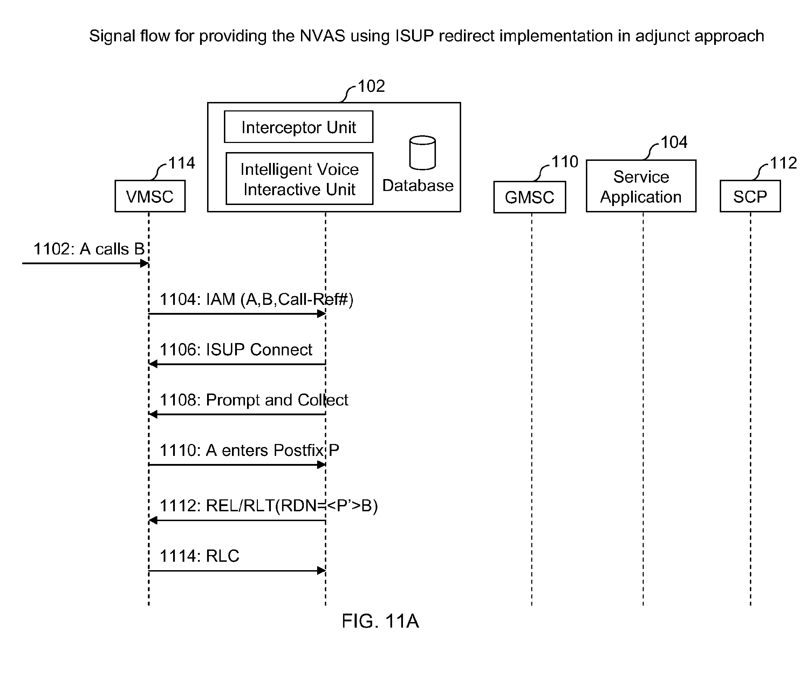

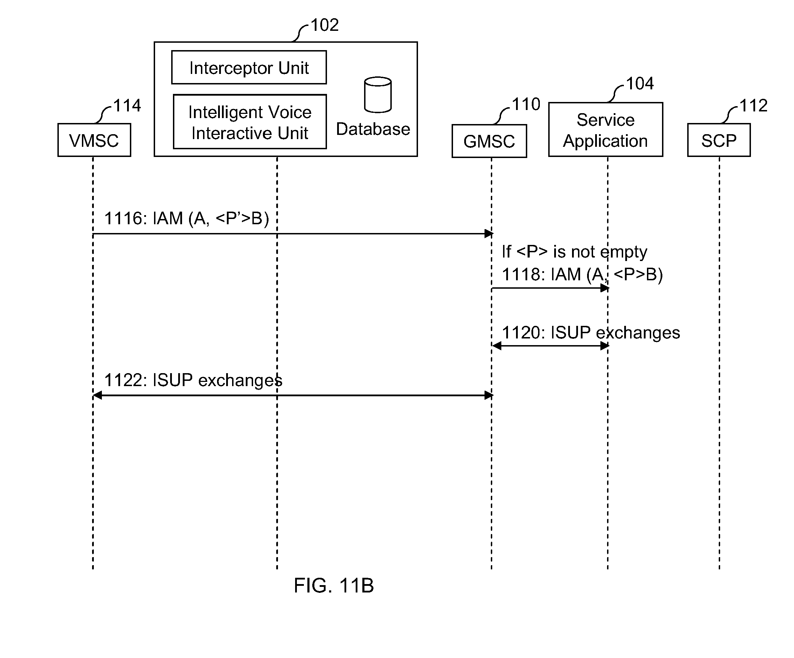

The in-band NVASS is able to provide the NVAS to subscriber 106 using the ISUP redirect interface as well. The operator must configure each VMSC to route SCCP messages corresponding to all mobile originated calls by subscriber 106 to Interceptor unit 118. FIGS. 11A and 11B represent a signal flow for providing the NVAS to the subscriber A using the ISUP redirect implementation in the adjunct approach, in accordance with an embodiment of the present invention. The subscriber A makes a call to the recipient B. At step 1102, the call reaches VMSC 114. Thereafter, at step 1104, VMSC 114 sends an ISUP IAM (A, B, Call-Ref#) message over signaling link 1006 as a call connection request to Interceptor unit 118. Interceptor unit 118 checks whether the NVAS is applicable to the called number B using a combination of one or more application logics. If the NVAS is applicable, Interceptor unit 118 instructs IVIU 120 to intercept a voice circuit associated with the call and prompt the subscriber to make an indication of service selection P. Hence, at step 1106, IVIU 120 responds to the call connection request, by sending an ISUP Connect message to VMSC 114. Thereafter, at step 1108, IVIU 120 prompts the subscriber A over the voice circuit to make the indication of service selection within the time interval T. The subscriber A makes the indication of service selection P, at step 1110. IVIU 120 passes P to Interceptor unit 118. Interceptor unit 118 determines whether P is a valid indication of service selection using the mapping table stored in database 122. Thereafter, Interceptor unit 118 determines a service application corresponding to P. Furthermore, Interceptor unit 118 prefixes the called number B using a prefix P' corresponding to the service application. If the subscriber fails to enter P within the time interval T or if P is invalid, P' is set to "#", with "#" corresponding to the end key, to avoid looping of the voice circuit associated with the call, back to Interceptor unit 118. Thereafter, at step 1112, IVIU 120 releases the voice circuit and directs VMSC 114 to route the call to the prefixed called number, <P'>B, by sending an ISUP REL message with RDN in the message set to <P'>B, ISUP REL (RDN = <P'>B), to VMSC 114 over signaling link 1006 for initiating the service application. VMSC 114 routes the voice circuits to a new called number (i.e. the RDN) from an original called number (i.e. the called number B in this case). In another embodiment of the present invention, IVIU 120 issues an ISUP Release Link Trunking (RLT) message to VMSC 114 with RDN set to <P'>B. Thereafter, at step 1114, VMSC acknowledge the release of the voice circuit to IVIU 120 using an ISUP RLC message. If P' is "#", VMSC 114 strips "#". Thus, VMSC 114 treats the call as a normal to call to the called number B, if P' is "#". Thereafter, at step 1116, VMSC 114 routes the call to service application 104, by issuing an ISUP IAM (A, <P'>B) message to GMSC 110 for. At step 1118, GMSC 110 relays the ISUP IAM (A, <P'>B) message to service application 104, if P' is not empty, indicating a valid service selection. Finally, at steps 1120 and 1122, service application 104 and VMSC 114 exchange one or more ISUP messages via GMSC 110 for initiating the value added service provided by service application 104.

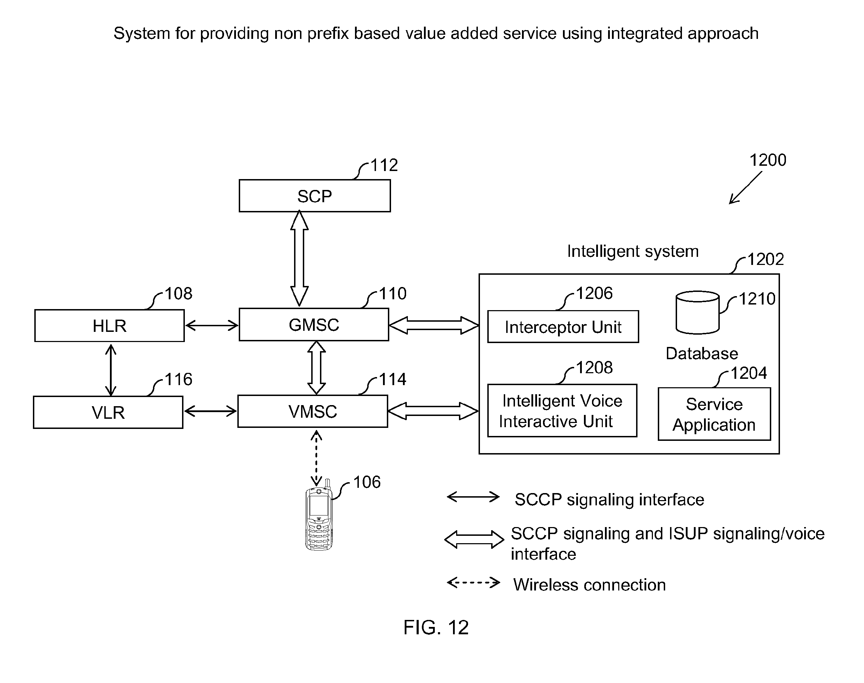

As mentioned before, instead of providing the NVAS through an existing service application deployed separately by the operator, the in-band NVASS may provide the NVAS to subscriber 106 directly through intelligent system 102. In this case, the service application is integrated with intelligent system 102. FIG. 12 illustrates a system 1200 for providing the NVAS in the integrated approach, in accordance with an embodiment of the present invention. System 1200 includes an intelligent system 1202.

Intelligent system 1202 includes a service application 1204, Interceptor unit 1206, Intelligent Voice Interactive Unit (IVIU) 1208, and database 1210. Interceptor unit 1206, IVIU 1208 and database 1210 communicate with each other via a packet switched connection, such as an Internet Protocol connection. In an embodiment of the present invention, Interceptor unit 1206 is an Intelligent Service Control Point (ISCP). In an embodiment of the present invention, IVIU 1208 is one of an Intelligent Peripheral (IP), a Service Resource Point (SRP), an Interactive Voice Response (IVR) system, or a combination thereof. In an embodiment of the present invention, service application 1204 is a prefix based service application. It will be apparent to a person skilled in the art, that service application 1204 is identical to service application 104. Furthermore, it will be apparent to a person skilled in the art, that Interceptor unit 1206, IVIU 1208 and database 1210 are identical to Interceptor unit 118, IVIU 120 and database 122, respectively. System 1200 further includes HLR 108, GMSC 110, SCP 112, VMSC 114, and VLR 116, all with similar functionality as explained in conjunction with FIG. 1. Intelligent System 1202, HLR 108, GMSC 110, and SCP 112 reside in the HPMN of subscriber 106. VMSC 114 and VLR 116 represent a current location of subscriber 106. If subscriber 106 is in the HPMN, VMSC 114 and VLR 116 reside in the HPMN. If subscriber 106 is currently roaming in a VPMN, VMSC 114 and VLR 116 reside in the VPMN.

When subscriber 106 makes a call to the recipient from his mobile handset, Interceptor unit 1206 intercepts a voice circuit associated with the call, and holds the voice circuit for the time interval T, while the voice circuit is connected to VMSC 114. Thereafter, IVIU 1208 prompts subscriber 106 to make an indication of service selection within the time interval T. System 1200 may prompt subscriber 106 by either playing a "beep sound", or by playing a warning message, such as "You have 10 seconds to select a service", or by playing a voice menu. Subscriber 106 makes the indication of service selection, i.e. a postfix P. The postfix P corresponds to a value added service subscriber 106 wants to obtain. Interceptor unit 1206 determines a service application corresponding to the postfix P using the mapping table stored in database 1210. An exemplary mapping table stored in database 1210 is given in Table 1. After determining the service application, Interceptor unit 1206 itself provides the corresponding value added service to subscriber 106. If the service application is a call-related service application, Interceptor unit 1206 connects the voice circuit of the call to the service application, such as service application 1204, in one embodiment of the present invention. The service application then, performs necessary call processing to provide the value added service to subscriber 106. In another embodiment of the present invention, when the service application is a non call-related service application, Interceptor unit 1206 disconnects the voice circuit between subscriber 106 and Interceptor unit 1206. Thereafter, Interceptor unit 1206 sends a service message to subscriber 106, requesting content corresponding to the selected non call-related service application. The service message is one of a Short Message Service (SMS), an Unstructured Supplementary Service Data (USSD), an Instant Message (IM), a Push to Talk (PTT) message and a Wireless Application Part (WAP) push message, a Hypertext Transfer Protocol (HTTP) push message, and a Uniform Resource Locator (URL). Subscriber 106 sends the content to Interceptor unit 1206 in a reply to the service message. Interceptor unit 1206 forwards the content to the service application. Finally, the service application processes the content as needed for providing the value added service to subscriber 106.

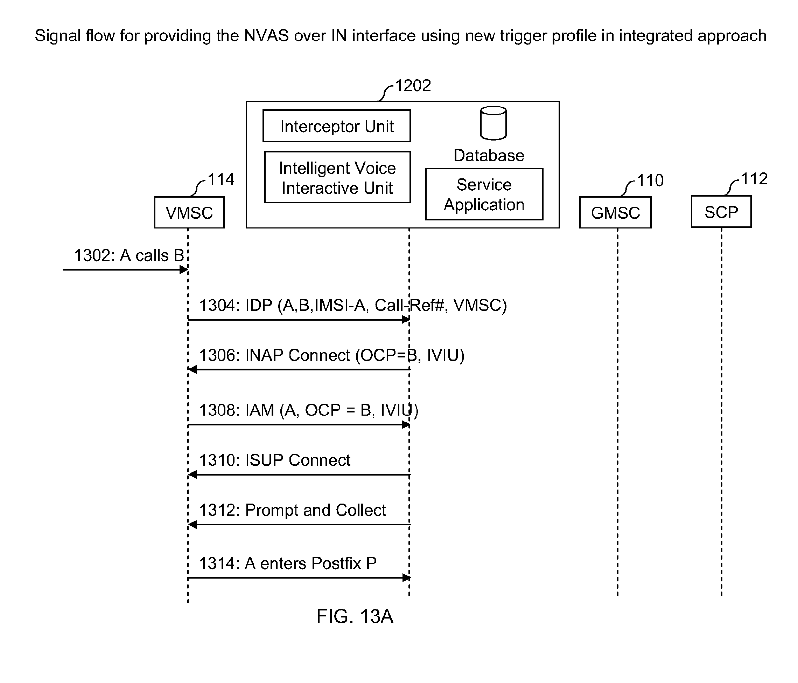

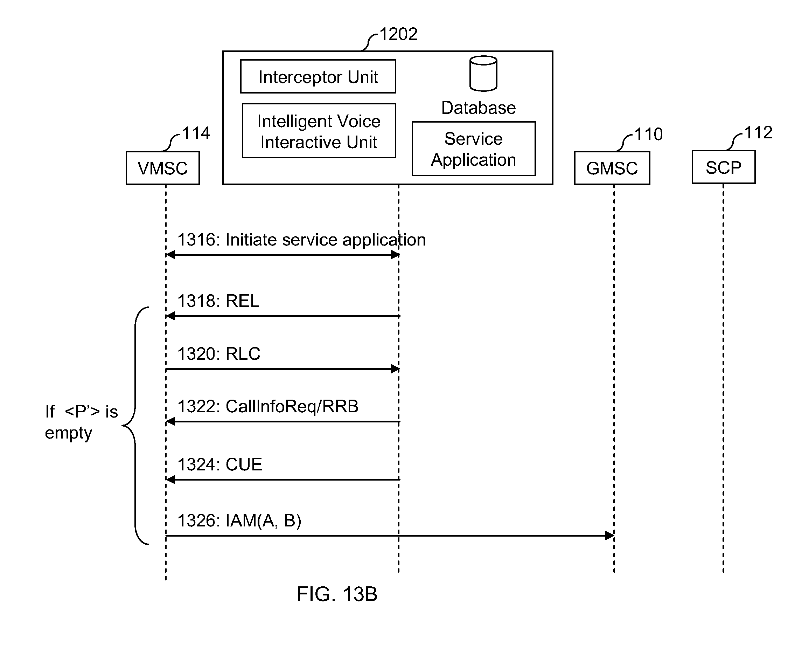

System 1200 directly provides NVAS to subscriber 106, i.e. intelligent system 1202 provides NVAS to subscriber 106 instead of invoking existing service application deployed by the operator. This approach is suitable for operators who have not implemented any value added service applications. FIGS. 13 to 15 explain signal flows corresponding to various embodiments for providing the NVAS in the integrated approach.

As explained earlier, in an embodiment of the present invention, in-band NVASS defines NVAS trigger profile for subscriber 106, when subscriber 106 registers for the NVAS. In-band NVASS sets one or more addresses in a trigger address list in NVAS trigger profile to the address of Interceptor unit 1206, so that Interceptor unit 1206 intercepts a voice circuit associated with a call from subscriber 106 to the recipient, without any prefix attached to the recipient's number. FIGS. 13A and 13B represent a signal flow for providing the NVAS to the subscriber A over the INAP interface, using NVAS trigger profile in the integrated approach, according to an embodiment of the present invention. The subscriber A calls the recipient B using either his phone address book, or the phone number list. At step 1302, the call reaches VMSC 114.

VMSC 114 obtains the address of Interceptor unit 1206 from the NVAS trigger profile of the subscriber A. At step 1304, VMSC 114 issues a call connection request to Interceptor unit 1206 using a message, such as an INAP IDP message. VMSC 114 passes various parameters related to the call, such as a calling number of subscriber A, called number of recipient B, an IMSI of subscriber A, call reference number, and an address of VMSC 114, to Interceptor unit 1206. Interceptor unit 1206 uses combination of one or more application logics to determine if the NVAS is applicable to the called number B. If NVAS is applicable, Interceptor unit 1206, at step 1306, instructs VMSC 114 to set up a voice circuit associated with the call with IVIU 1208 using an INAP Connect (OCP = B, IVIU) message. Thereafter, at step 1308, VMSC 114 sets up the voice circuit with IVIU 1208, by issuing an ISUP IAM (A, OCP = B, IVIU) message to IVIU 1208. Thereafter, at step 1310, IVIU 1208 sends an ISUP Connect message to VMSC 114 to acknowledge the set up of the voice circuit. Thereafter, at step 1312, IVIU 120 prompts the subscriber A to make an indication of service selection within the time interval T. The subscriber A makes the indication of service selection P over the voice circuit at step 1314. IVIU 1208 sends P to Interceptor unit 1206. Interceptor unit 1206 checks whether P is a valid indication of service selection using the mapping table stored in database 1210, and if found valid, determines a corresponding service application, such as service application 1204. Thereafter, at step 1316, Interceptor unit 1206 directly provides the value added service to the subscriber A.

In an embodiment of the present invention, if service application 1204 is a call-related service application, Interceptor unit 1206 routes the voice circuit associated with the call to service application 1204 and service application 1204 then, performs necessary call processing for providing the value added service to the subscriber A. In another embodiment of the present invention, if service application is non call-related service application, Interceptor unit 1206 disconnects the call from the subscriber A. Thereafter, Interceptor unit 1206 sends a service message to the subscriber A, requesting content corresponding to the value added service. The subscriber A sends the content in a reply to the service message. Interceptor unit 1206 then, forwards the content to service application 1204, which performs necessary processing to provide the value added service to the subscriber A.

If P is invalid or the subscriber A fails to enter P within the time interval T, IVIU 1208, at step 1318, issues an ISUP REL message to VMSC 114 for releasing the voice circuit from IVIU 1208. Thereafter, at step 1320, VMSC 114 returns an ISUP RLC message to Interceptor unit 1206 as an acknowledgement. Thereafter, at step 1322, Interceptor unit 1206 sends an INAP CallInfoReq message to VMSC 114 for requesting call information from VMSC 114. The call information includes, but is not limited to, call duration, stop time and release cause. Alternatively, at step 1322, Interceptor unit 1206 sends an INAP RRB message to VMSC 114 to monitor call-related events. The call-related events include, but are not limited to, an answer event, a disconnect event, a busy event, and a no-answer event. Interceptor unit 1206 uses either the call information or the call-related events for maintaining billing records. Thereafter, at step 1324, Interceptor unit 1206 instructs VMSC 114 to continue the call to the called number B using an INAP CUE message. Finally, at step 1326, VMSC 114 issues an ISUP IAM (A, B) message to GMSC 110 to route the call to the called number B.

A person skilled in the art would recognize that for various embodiments corresponding to the CAP interface and the WIN interface between VMSC 114 and Interceptor unit 1206, system 1200 follows similar call flows, with various INAP messages replaced by corresponding CAP messages and WIN messages, respectively. Furthermore, a person skilled in the art will also recognize that the integrated approach of the in-band NVASS does not affect or modify any configuration in existing SCP. Therefore, in an embodiment of the present invention, when system 1200 uses the existing subscription trigger profile of the subscriber A, signal flows for providing the NVAS are similar to signal flows for the adjunct approach described earlier, in conjunction with various embodiments of the present invention.

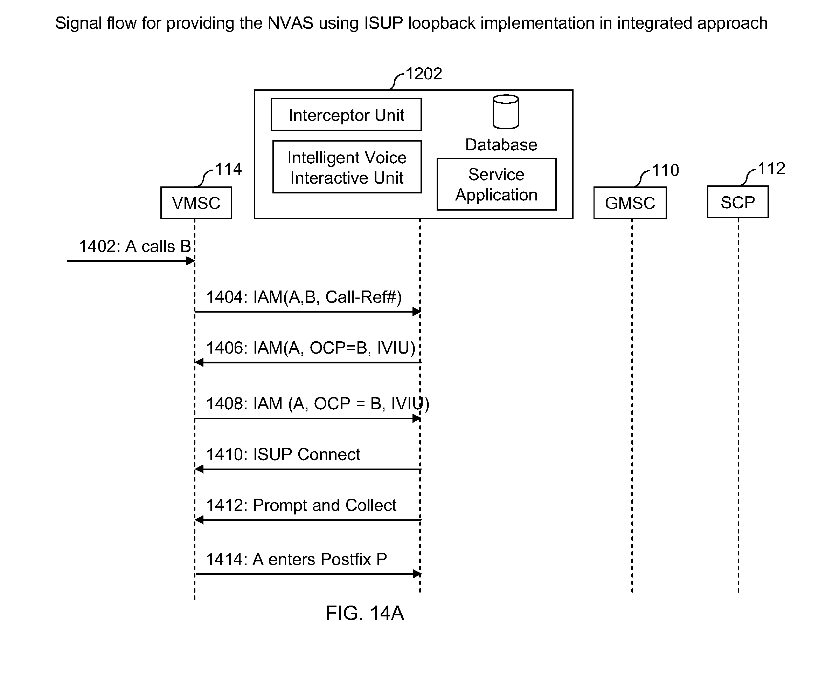

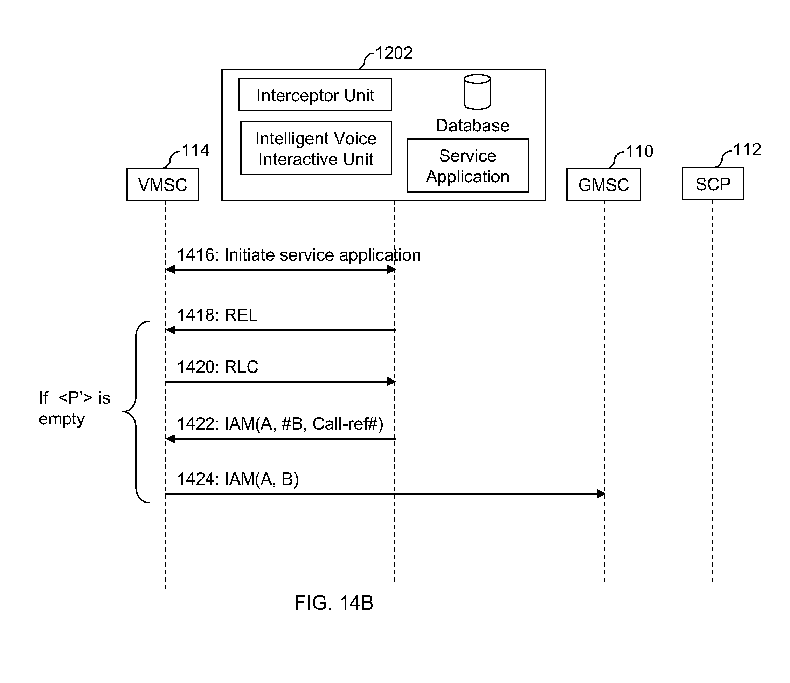

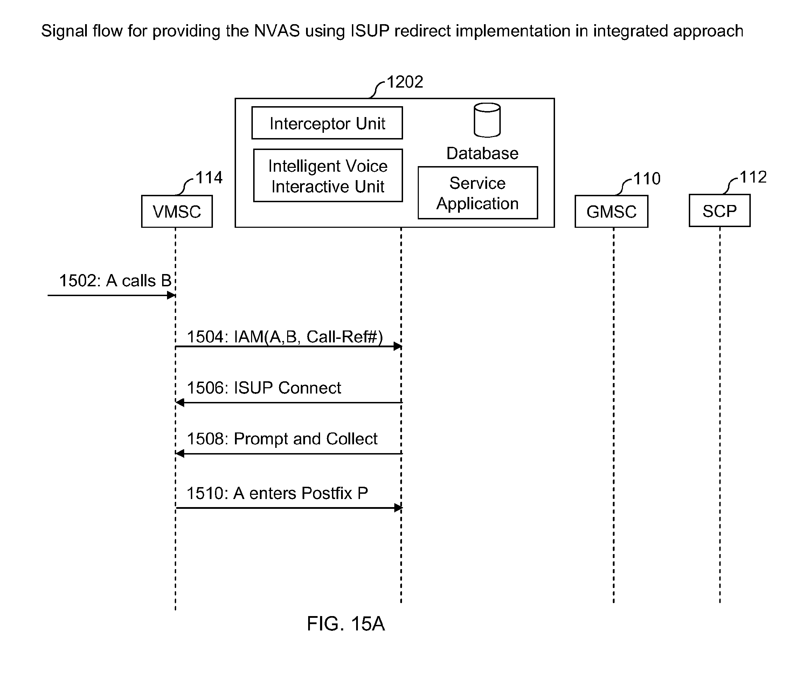

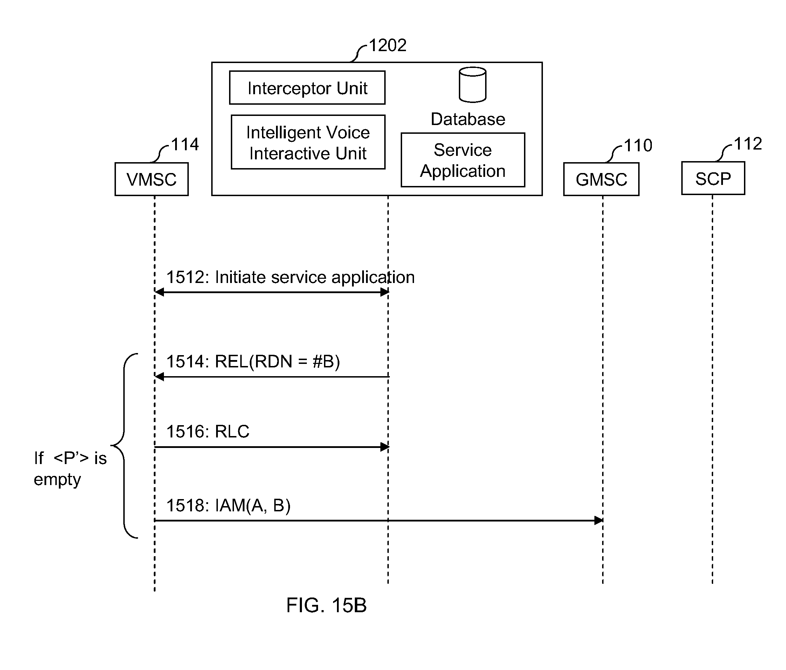

Like system 100, system 1200 also supports the ISUP interface between VMSC 114 and Interceptor unit 1206. A person skilled in the art will recognize that the ISUP interface implementations, in accordance with various embodiments of the present invention, explained in conjunction with FIGS. 8 and 10, are transparent to the adjunct and integrated approach. FIGS. 14 and 15 illustrate various embodiments for providing NVAS using ISUP interface. FIGS. 14A and 14B represent a signal flow for providing NVAS to subscriber A using ISUP loop-back implementation in the integrated approach, in accordance with an embodiment of the present invention. The subscriber A makes a call to the recipient B. At step 1402, the call reaches VMSC 114. Thereafter, at step 1404, VMSC 114 sends a call connection request to Interceptor unit 1206 using an ISUP IAM (A, B, Call-Ref#) message. As explained earlier in various embodiments of the present invention, Interceptor unit 1206 checks whether NVAS is applicable to the recipient number B using combination of one or more application logics. For example, NVAS is inapplicable if recipient number B starts with a prefix present in the mapping table maintained in database 1210, or if recipient number B is shorter than a pre-defined length, or if recipient number B belongs to a blacklist of subscriber A. If NVAS is applicable, Interceptor unit 1206, at step 1406, intends to set up a voice circuit for the call with IVIU 1208, by sending an ISUP IAM (A, OCP=B, IVIU) message to VMSC 114. Thereafter, at step 1408, VMSC 114 issues an ISUP IAM (A, OCP=B, IVIU) message to IVIU 1208 to set up the voice circuit with IVIU 1208. IVIU 1208 acknowledges the set up of the voice circuit, at step 1410, through an ISUP Connect message. Thereafter, at step 1412, IVIU 1208 prompts the subscriber A, over the voice circuit to make an indication of service selection, P, within the time interval T. The subscriber A makes the indication of service selection P at step 1414. IVIU 1208 passes P to Interceptor unit 1206. Interceptor unit 1206 determines whether P is a valid indication of service selection using the mapping table stored in database 1210. In addition, Interceptor unit 1206 determines a service application corresponding to P, if P is valid. Thereafter, at step 1416, Interceptor unit 1206 itself provides the value added service corresponding to the selected P to the subscriber A, by initiating service application 1204 integrated with Interceptor unit 1206.

If P is invalid or the subscriber A fails to enter P within the time interval T, IVIU 1208, at step 1418, releases the voice circuit, by issuing an ISUP REL message to VMSC 114. Thereafter, at step 1420, VMSC 114 confirms the release of the voice circuit to IVIU 1208 using an ISUP RLC message. Thereafter, at step 1422, Interceptor unit 1206 issues an ISUP IAM message to VMSC 114 to direct VMSC 114 to continue the call to the called number B. Interceptor unit 1206 prefixes the called number B with a prefix, "#", corresponding to an end key, before issuing the ISUP IAM message, to avoid looping of the voice circuit of the call, back to Interceptor unit 1206. Finally, at step 1424, VMSC 114, after removing the prefix "#", issues an ISUP IAM (A, B) message to GMSC 110 for routing the call to the called number B.

FIGS. 15A and 15B represent a signal flow for providing the NVAS to the subscriber A using the ISUP redirect implementation in the integrated approach, in accordance with an embodiment of the present invention. A call from the subscriber A to the recipient B reaches VMSC 114 at step 1502. Thereafter, at step 1504, VMSC 114 sends an ISUP IAM (A, B, Call-Ref#) message to Interceptor unit 1206. Interceptor unit 1206 checks whether the NVAS is applicable to the called number B using combination of one or more application logics, as explained in conjunction with FIG. 14. If the NVAS is applicable to the called number B, Interceptor unit 1206 instructs IVIU 1208 to intercept a voice circuit associated with the call and prompt the subscriber A to make an indication of service selection, i.e. postfix P. Therefore, at step 1506, IVIU 1208 responds to the ISUP IAM message, by sending an ISUP Connect message to VMSC 114. Thereafter, at step 1508, IVIU 1208 prompts the subscriber A over the voice circuit to make the indication of service selection within the time interval T. The subscriber A makes the indication of service selection P, at step 1510. IVIU 1208 passes P to Interceptor unit 1206. Interceptor unit 1206 determines whether P is a valid indication of service selection using the mapping table stored in database 1210. In addition, Interceptor unit 1206 determines a service application corresponding to P, such as service application 1204. Thereafter, at step 1512, Interceptor unit 1206 initiates service application 1204 for providing corresponding value added service. Thus, Interceptor unit 1206 directly provides the value added service to the subscriber A.

If the subscriber fails to enter P within the time interval T or if P is invalid, Interceptor unit 1206 prefixes the called number B with "#", where "#" corresponds to the end key, to avoid looping of the voice circuit associated with the call back to Interceptor unit 1206. Thereafter, at step 1514, IVIU 1208 releases the voice circuit and directs VMSC 114 to route the call to the called number, by sending an ISUP REL message with RDN set to #B, ISUP REL (RDN = #B), to VMSC 114. In another embodiment of the present invention, IVIU 1208 issues an ISUP Release Link Trunking (RLT) message to VMSC 114 with RDN set to #B. Thereafter, at step 1516, VMSC 114 acknowledges the release of the voice circuit to IVIU 1208 using an ISUP RLC message. Furthermore, VMSC 114 strips off "#". Finally, at step 1518, VMSC 114 continues with the call, by directing GMSC 110 to route the call to the called number B using an ISUP IAM (A, B) message.

As mentioned earlier, the in-band NVASS facilitates both call-related and non call-related value added services. The call-related value added services include, but are not limited to, voice Short Message Service (SMS), video SMS, rich talk, character voice, mobile Skype, ad-driven call, and Voice over Internet Protocol (VoIP) call. Some examples of the non call-related services are color SMS, ad-driven SMS, anonymous SMS, credit transfer, Unstructured Supplementary Services Data (USSD) call back, and USSD call me.

In an exemplary case, for the voice SMS service, the subscriber A dials the recipient's number B directly from his phone address book. The in-band NVASS intercepts the call and prompts the subscriber A to make an indication of service selection. In an exemplary case, the subscriber A enters "*" corresponding to the voice SMS service application. The in-band NVASS initiates a voice SMS service application, either directly from intelligent system 1202 in the integrated approach or indirectly by invoking the service application from intelligent system 102 in the adjunct approach. The subscriber A then enters voice SMS content over a voice circuit associated with the call. Finally, the voice SMS service application sends a notification to the recipient that the recipient has a voice SMS from the subscriber A. The recipient can retrieve the voice SMS as per his convenience.

In another exemplary case, the subscriber A dials the recipient's number B from a missed calls list. The in-band NVASS intercepts the call and prompts the subscriber A to make an indication of service selection. In an exemplary case, the subscriber A selects the color SMS service by entering the postfix "222". The in-band NVASS initiates a color SMS service application either directly from intelligent system 1202 in the integrated approach or indirectly by invoking the service application from intelligent system 102 in the adjunct approach. The subscriber A receives an SMS for the subscriber A to reply with content corresponding to the color SMS service. In the adjunct approach, the color SMS service application sends the SMS, whereas in the integrated approach, Interceptor unit 1202 sends the SMS. Furthermore, in the integrated approach Interceptor unit 1202 forwards the received content to the color SMS service application, which then translates the content to an MMS message to be delivered to the recipient's number B.

It will be apparent to a person skilled in the art, that the in-band NVAS service can also be applied to CDMA/ANSI-41D, other technologies such as, but not limited to, VoIP, WiFi, 3GSM and inter-standard roaming. For example, a CDMA roaming subscriber traveling with an HPMN CDMA handset. Another example is a CDMA roaming subscriber travels with an HPMN GSM SIM and a GSM handset. Yet another example is a GSM roaming subscriber traveling with an HPMN CDMA RUIM and a CDMA handset. To support these variations, the intelligent system 102 will have an SS7 and a network interface corresponding to the HPMN network as well as an SS7 and a network interface to the FPMN network. It would be obvious to a person skilled in the art that these two interfaces in different directions may not have to be the same technologies. Further, there could be multiple types of interface in both directions.

An exemplary list of the mapping between GSM MAP and ANSI41D is described as a reference.

| **GSM** | **ANSI 41D** |
|---|---|
| IDP | ORREQ |
| CTR | CONNRES |
| CON/CUE | orreq |
| ERB (Disconnect) | ODISCONNECT |
| ERB (Answer) | OANSWER |

The present invention can take the form of an entirely hardware embodiment, an entirely software embodiment, or an embodiment containing both hardware and software elements. In accordance with an embodiment of the present invention, the invention is implemented in software, which includes but is not limited to firmware, resident software, microcode, etc.

Furthermore, the invention can take the form of a computer program product, accessible from a computer-usable or computer-readable medium, providing program code for use by, or in connection with, a computer or any instruction execution system. For the purposes of this description, a computer-usable or computer readable medium can be any apparatus that can contain, store, communicate, propagate, or transport the program for use by, or in connection with, the instruction execution system, apparatus, or device.

The medium can be an electronic, magnetic, optical, electromagnetic, infrared, or semiconductor system (or apparatus or device), or a propagation medium. Examples of a computer-readable medium include a semiconductor or solid-state memory, magnetic tape, a removable computer diskette, a random access memory (RAM), a read-only memory (ROM), a rigid magnetic disk, and an optical disk. Current examples of optical disks include compact disk - read only memory (CDROM), compact disk - read/write (CD-R/W), and Digital Versatile Disk (DVD).

A computer usable medium provided herein includes a computer usable program code, which when executed, intercepts a voice circuit, associated with a call from a subscriber to a recipient, at an Interceptor unit, while the voice circuit is connected to a switch. The subscriber calls a recipient's number without any prefix. The computer program product further includes a computer usable program code for prompting the subscriber by an intelligent voice interactive unit to make an indication of service selection over the voice circuit. The computer program product further includes a computer usable program code for sending by the intelligent voice interactive unit, the indication of service selection to the Interceptor unit. The computer program product further includes a computer usable program code for determining by the Interceptor unit, a service application using the indication of the service selection, wherein the service application is a value added service.

The in-band NVAS system facilitates value added services to a subscriber without a need for the subscriber to dial a recipient's number with a prefix corresponding to the value added service he wishes to obtain. This allows the subscriber to make a call to the recipient from a phone address book, or a phone call log list (e.g. a missed calls list, a received calls list, a dialed numbers list). Furthermore, the in-band NVAS system is able to send a voice menu to the subscriber to prompt the subscriber to select a value added service, with postfixes corresponding to value added services listed in the voice menu. This gives a better user experience to the subscriber, as the subscriber does not need to remember the postfixes for the value added services. The subscriber may be registered in an HPMN or may be roaming in a VPMN. In addition, an operator deploying the in-band NVAS system need not change existing prefix based value added service solution deployed by the operator. The in-band NVAS is able to convert the postfix to a prefix corresponding to the existing prefix based vale added service solutions. Furthermore, the in-band NVAS system is able to utilize existing subscription trigger profile of the subscriber to facilitate the NVAS. The in-band NVAS can facilitate both call-related as well as non call-related value added services.

The components of in-band NVAS system described above include any combination of computing components and devices operating together. The components of the in-band NVAS system can also be components or subsystems within a larger computer system or network. The in-band NVAS system components can also be coupled with any number of other components (not shown), for example, other buses, controllers, memory devices, and data input/output devices, in any number of combinations. In addition, any number or combination of other processor-based components may be carrying out the functions of the in-band NVAS system.

It should be noted that the various components disclosed herein may be described using computer aided design tools, and/or expressed (or represented) as data and/or instructions, embodied in various computer-readable media, in terms of their behavioral, register transfer, logic component, transistor, layout geometries, and/or other characteristics. Computer-readable media, in which such formatted data and/or instructions may be embodied, include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole, and not to any particular portions of this application. When the word "or" is used in reference to a list of two or more items, that word covers all of the following interpretations of the word: any of the items in the list, all of the items in the list, and any combination of the items in the list.

The above description of illustrated embodiments of the in-band NVAS system is not intended to be exhaustive or to limit the in-band NVAS system to the precise form disclosed. While specific embodiments of, and examples for, the in-band NVAS system are described herein for illustrative purposes, various equivalent modifications are possible within the scope of the in-band NVAS system, as those skilled in the art will recognize. The teachings of the in-band NVAS system provided herein can be applied to other processing systems and methods. They may not be limited to the systems and methods described above.

The elements and acts of the various embodiments described above can be combined to provide further embodiments. These and other changes can be made to the in-band NVAS system in light of the above detailed description.

### Other Variations

Provided above for the edification of those of ordinary skill in the art, and not as a limitation on the scope of the invention, are detailed illustrations of a scheme for providing in-band non-prefix based value added services to a subscriber. Numerous variations and modifications within the spirit of the present invention will of course occur to those of ordinary skill in the art in view of the embodiments that have been disclosed. For example, the present invention is implemented primarily from the point of view of GSM mobile networks as described in the embodiments. However, the present invention may also be effectively implemented on GPRS, 3G, CDMA, WCDMA, WiMax etc., or any other network of common carrier telecommunications in which end users are normally configured to operate within a "home" network to which they normally subscribe, but have the capability of also operating on other neighboring networks, which may even be across international borders.

The examples under the present invention in-band Non-prefix based Value Added Service (NVAS) system detailed in the illustrative examples contained herein are described using terms and constructs drawn largely from GSM mobile telephony infrastructure. However, use of these examples should not be interpreted as limiting the invention to those media. In-band non-prefix based value added service system - a method for providing value added services to a subscriber can be of use and provided through any type of telecommunications medium, including without limitation: (i) any mobile telephony network including without limitation GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices; (iii) an entertainment console platform such as Sony Playstation, PSP or other apparatus that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over IP communications such as those provided by Vonage or Packet8.

In describing certain embodiments of the in-band NVAS system under the present invention, this specification follows the path of a telecommunications call, from a calling party to a called party. For the avoidance of doubt, such a call can be a normal voice call, in which the subscriber telecommunications equipment is also capable of visual, audiovisual or motion-picture display. Alternatively, those devices or calls can be for text, video, pictures or other communicated data.

In the foregoing specification, specific embodiments of the present invention have been described. However, one of ordinary skill in the art will appreciate that various modifications and changes can be made without departing from the scope of the present invention as set forth in the claims below. Accordingly, the specification and the figures are to be regarded in an illustrative rather than a restrictive sense, and all such modifications are intended to be included within the scope of present invention. The benefits, advantages, solutions to problems, and any element(s) that may cause any benefit, advantage, or solution to occur, or to become more pronounced, are not to be construed as a critical, required, or essential feature or element of any or all of the claims.

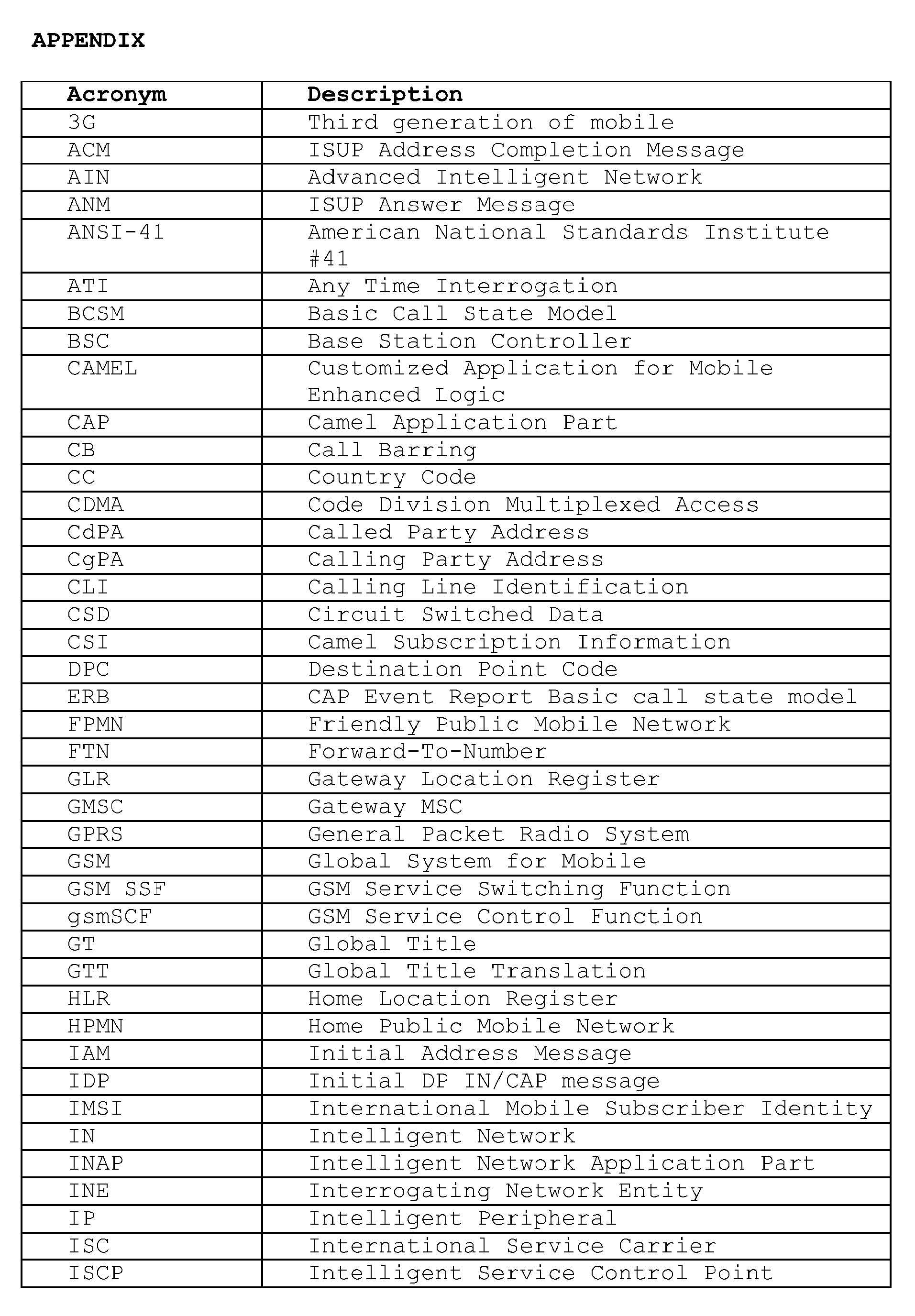

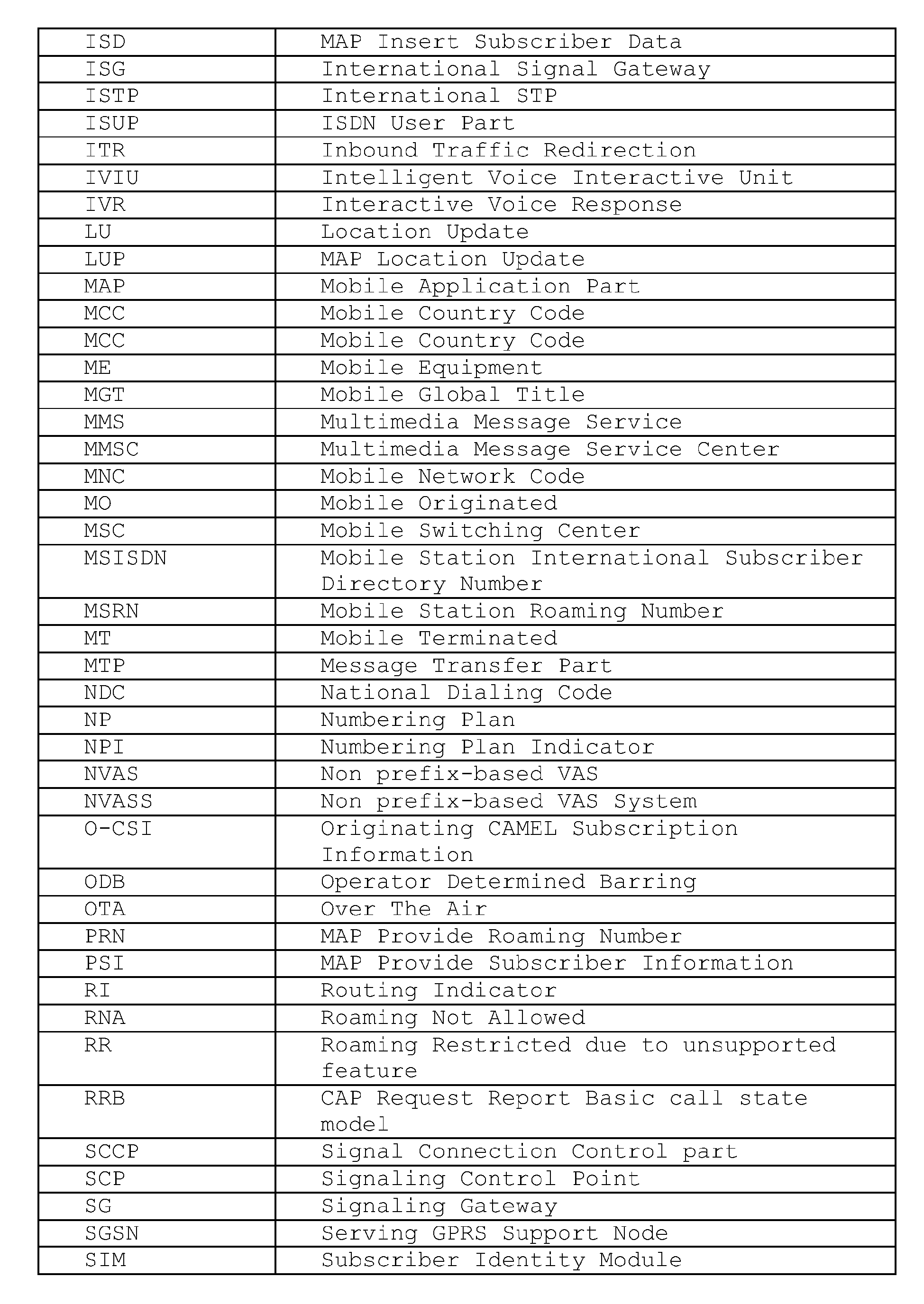

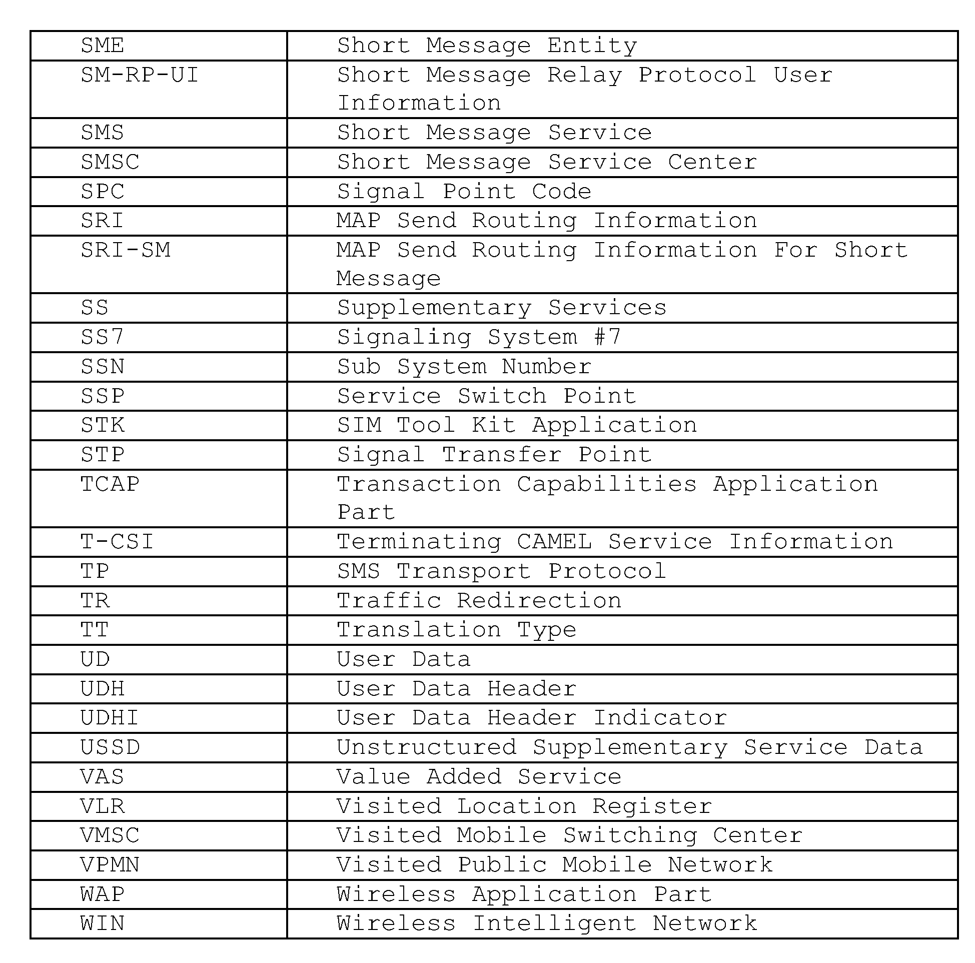

### Technical references (each of which is incorporated herein in its entirety)

GSM 378 on CAMEL
   Digital cellular telecommunications system (Phase 2+); Customised Applications for Mobile network Enhanced Logic (CAMEL) Phase 2;
   Stage 2
   (GSM 03.78 version 6.7.0 Release 1997)
GSM 978 on CAMEL Application protocol
   Digital cellular telecommunications system (Phase 2+); Customised Applications for Mobile network Enhanced Logic (CAMEL);
   CAMEL Application Part (CAP) specification
   (GSM 09.78 version 7.1.0 Release 1998)
Q761-Q730 on ISUP Signaling, Function and Procedure
Q.761 (Functional description of the ISDN User Part of CCITT Signaling System No. 7)
Q.762 (General functions of CCITT Signaling System No. 7 ISDN User Part Messages and parameters)
Q.763 (Formats and codes of CCITT Signaling System No. 7 ISDN User Part Messages and parameters)
Q.764 (1999), Signaling System No. 7 - ISDN User Part signaling procedures
Q.763 (1999), Signaling System No. 7 - ISDN User Part formats and codes
Q.730 (1999), ISDN User Part supplementary services
Q.711 (1996), Functional description of signaling connection control part
Q.712 (1996), Definition and function of signaling connection control part messages
Q.713 (1996), Signaling connection control part formats and codes
Q.714 (1996), Signaling connection control part procedures
Q.716 (1993), Signaling Connection Control Part (SCCP) performance
GSM 340 on SMS
   Digital cellular telecommunications system (Phase 2+); Technical realization of the Short Message Service (SMS);
   (GSM 03.40 version 7.4.0 Release 1998)
SMPP Forum: SMPP Protocol Document Version:- 12-Oct-1999 Issue 1.2
Universal Mobile Telecommunications System (UMTS); Multimedia Messaging Service (MMS), Functional description;
   Stage 2
   (3GPP TS 23.140 version 4.2.0 Release 4)
GSM 902 on MAP specification
   Digital cellular telecommunications system (Phase 2+); Mobile Application Part (MAP) Specification
   (3GPP TS 09.02 version 7.9.0 Release 1998)
GSM 340 on SMS
Digital cellular telecommunications system (Phase 2+); Technical realization of the Short Message Service (SMS);
   (GSM 03.40 version 7.4.0 Release 1998)
GSM 378 on CAMEL
   Digital cellular telecommunications system (Phase 2+); Customised Applications for Mobile network Enhanced Logic (CAMEL) Phase 2;
   Stage 2
   (GSM 03.78 version 6.7.0 Release 1997)
GSM 978 on CAMEL Application protocol
   Digital cellular telecommunications system (Phase 2+); Customised Applications for Mobile network Enhanced Logic (CAMEL);
   CAMEL Application Part (CAP) specification
   (GSM 09.78 version 7.1.0 Release 1998)
Technical Specification
   3rd Generation Partnership Project;
   Technical Specification Group Services and System Aspects; Service accessibility
   (Release 1999)
Signalling procedures and the Mobile Application Part (MAP)
   (Release 1999)
Q1214-Q1218 On Intelligent Networks
   IMS architectures, 3GPP, and 3GPP2
Converse Patent
Kirusa Patent
Color and session-based Voice SMS and Video SMS patent

## Claims

1. A method for providing value added services to a subscriber of a mobile communications network, the method comprising:
intercepting a communication from the subscriber;
providing a prompt for service selection to the subscriber;
receiving an indication of service selection; and
determining a service application based on the received indication of service selection.

2. The method of claim 1, wherein the mobile communications network has an interceptor unit; wherein the communication from the subscriber comprises a non-prefix communication from the subscriber; wherein the indication of service selection is received from the subscriber at the interceptor unit; and wherein the service application is a non-prefix based value added service.

3. The method of claim 2, further comprising:
initiating the service application.

4. The method of claim 3, wherein the service application is initiated via an adjunct approach.

5. The method of claim 3, wherein the service application is initiated via an integrated approach.

6. The method of any of claims 2-5, wherein the prompt for service selection is received over an in-band channel.

7. The method of any of claims 2-6, further comprising:
resuming the non-prefix communication based on the non-prefix based value added service.

8. The method of any of claims 2-7, wherein the non-prefix communication has an associated voice circuit, and wherein intercepting a non-prefix communication includes:
intercepting the associated voice circuit; and
holding the intercepted voice circuit for a pre-defined time interval.

9. The method of claim 8, wherein the associated voice circuit is intercepted at a switch.

10. The method of any of claims 2-9, further comprising:
at the interceptor unit, applying a filtering criterion to the non-prefix communication.

11. The method of any of claims 2-10, wherein the non-prefix communication is initiated using a telephone number received from a group consisting of an address book, a number list, and a telephone pad.

12. The method of any of claims 2-11, wherein the interceptor unit is an Intelligent Service Control Point.

13. The method of any of claims 2-12, wherein the prompt for service selection is selected from a group consisting of a beep sound, a warning message, and a voice menu.

14. The method of any of claims 2-13, wherein a standby interceptor unit is provided for failover support.

15. The method of any of claims 2-14, further comprising:
providing a prompt for carrier selection code to the subscriber.

16. The method of claim 1, wherein the communication from the subscriber comprises a communication request from the subscriber, including an indication of a destination of the communication request; wherein the prompt comprises an option for selection of a communications service to the subscriber; and wherein the method further comprises:
operating a service application based on the received indication of service selection.

17. The method of claim 16, wherein the service application is voice Short Message Service.

18. The method of claim 16, wherein the service application is adding media to a subscriber communication.

19. The method of claim 16, wherein the service application is monitoring a communications session for voice analysis.

20. The method of claim 16, wherein the service application is monitoring a voice communications session to detect lies.

21. The method of claim 16, wherein the service application is monitoring a voice communications session for emotion.

22. The method of claim 16, wherein the service application is analyzing the language of a text message for meaning and adding media to that text message according to the meaning.

23. The method of claim 16, wherein the service application is recognizing music.

24. The method of any of claims 16-23, wherein the option is a visual indication of service selection choices.

25. The method of any of claims 16-23, wherein the option is an audible prompt.

26. The method of any of claims 16-25, wherein the indication of selection is a character entered on the subscriber's handset.

27. The method of any of claims 16-25, wherein the indication of selection is spoken by the subscriber.

28. A computer program product comprising computer readable program code means for causing a computer to perform all the steps of any of claims 1-27.

29. The computer program product of claim 28 embodied on a computer usable medium.

30. A system for providing value added services to a subscriber of a mobile communications network, the system comprising:
means for intercepting a communication from the subscriber;
means for providing a prompt for service selection to the subscriber;
means for receiving an indication of service selection; and
means for determining a service application based on the received indication of service selection.

31. The system of claim 30, wherein the mobile communications network has an interceptor unit; wherein the communication from the subscriber comprises a non-prefix communication from the subscriber; wherein the indication of service selection is received from the subscriber at the interceptor unit; and wherein the service application is a non-prefix based value added service.

32. The system of claim 31, further comprising:
means for initiating the service application.

33. The system of claim 32, wherein the service application is initiated via an adjunct approach.

34. The system of claim 32, wherein the service application is initiated via an integrated approach.

35. The system of any of claims 31-34, wherein the prompt for service selection is received over an in-band channel.

36. The system of any of claims 31-35, further comprising:
means for resuming the non-prefix communication based on the non-prefix based value added service.

37. The system of any of claims 31-36, wherein the non-prefix communication has an associated voice circuit, and wherein the means for intercepting a non-prefix communication includes:
means for intercepting the associated voice circuit; and
means for holding the intercepted voice circuit for a pre-defined time interval.

38. The system of claim 37, wherein the associated voice circuit is intercepted at a switch.

39. The system of any of claims 31-38, further comprising:
means for applying a filtering criterion to the non-prefix communication.

40. The system of any of claim 31-39, wherein the non-prefix communication is initiated using a telephone number received from a group consisting of an address book, a number list, and a telephone pad.

41. The system of any of claims 31-40, wherein the interceptor unit is an Intelligent Service Control Point.

42. The system of any of claims 31-41, wherein the prompt for service selection is selected from a group consisting of a beep sound, a warning message, and a voice menu.

43. The system of any of claims 31-42, wherein a standby interceptor unit is provided for failover support.

44. The system of any of claims 31-43 further comprising:
means for providing a prompt for carrier selection code to the subscriber.

45. The system of claim 30, wherein the communication from the subscriber comprises a communication request from the subscriber, including an indication of a destination of the communication request; wherein the prompt comprises an option for selection of a communications service to the subscriber; and wherein the system further comprises:
means for operating a service application based on the received indication of service selection.

46. The system of claim 45, wherein the service application is voice Short Message Service.

47. The system of claim 45, wherein the service application is adding media to a subscriber communication.

48. The system of claim 45, wherein the service application is monitoring a communications session for voice analysis.

49. The system of claim 45, wherein the service application is monitoring a voice communications session to detect lies.

50. The system of claim 45, wherein the service application is monitoring a voice communications session for emotion.

51. The system of claim 45, wherein the service application is analyzing the language of a text message for meaning and adding media to that text message according to the meaning.

52. The system of claim 45, wherein the service application is recognizing music.

53. The system of any of claims 45-52, wherein the option is a visual indication of service selection choices.

54. The system of any of claims 45-52, wherein the option is an audible prompt.

55. The system of any of claims 45-54, wherein the indication of selection is a character entered on the subscriber's handset.

56. The system of any of claims 45-54, wherein the indication of selection is spoken by the subscriber.
